# EUROPEAN PATENT SPECIFICATION

(11) **EP 4 258 803 B1**
(45) Date of publication and mention of the grant of the patent: **28.10.2026**
(21) Application number: 21900080.9
(22) Date of filing: 02.12.2021
(51) Int. Cl.: H04W 76/27, H04W 88/04, H04W 88/08

(54) **METHOD AND APPARATUS FOR TERMINAL RRC CONNECTION RECOVERY**
VERFAHREN UND VORRICHTUNG ZUR RRC-VERBINDUNGSWIEDERHERSTELLUNG EINES ENDGERÄTS
PROCÉDÉ ET APPAREIL DE RÉCUPÉRATION DE CONNEXION RRC DE TERMINAL

(30) Priority: 02.12.2020 CN 202011391500
(43) Date of publication of application: 11.10.2023
(73) Proprietor: Datang Mobile Communications Equipment Co., Ltd., Beijing 100085 (CN)
(72) Inventor: ZHAO, Yali, Beijing 100085 (CN)
(74) Representative: Studio Torta S.p.A.
(86) International application number: PCT/CN2021/135160
(87) International publication number: WO 2022/117054

(56) References cited:
- EP-A1- 3 742 815
- CN-A- 111 328 154
- CN-A- 111 432 469
- CN-A- 111 630 900
- US-A1- 2018 270 892
- US-A1- 2020 100 308
- APPLE: "R2-2009526 "Discussion on RRC_INACTIVE remote UE"", 3GPP TSG_RAN\WG2_RL2, 22 October 2020 (2020-10-22), XP051942478
- VIVO RAPPORTEUR: "Summary of [AT112-e][610][Relay] RRC states for L2 relay", 3GPP DRAFT; R2-2011262; 3GPP TSG-RAN WG2 MEETING #112-E; E-MEETING, 2ND – 13TH NOVEMBER 2020, vol. RAN WG2, 13 November 2020 (2020-11-13), pages 1 - 14, XP009537250

## Description

### TECHNICAL FIELD

The present application relates to the field of communication technologies, and in particular, to a method and apparatus for Radio Resource Control (RRC) connection resuming of a terminal.

### BACKGROUND

With the development of the communication technology, layouts of network devices (such as base stations) have gradually increased, greatly increasing coverage areas of a mobile communication network. However, it is inevitable that there are still blind areas of the mobile signal coverage in some areas. To solve this problem, a UE-to-Network Relay (hereinafter referred to as a relay) from terminal to network device has been introduced. The relay can be a device with relay function. If a terminal enters the coverage of another terminal, the other terminal can be used as a relay device of the terminal, where the relay device communicates with the network device through a Uu interface, and the terminal communicates with the relay device through a direct communication link (also known as Sidelink or PC5), so the terminal can communicate with the network device through the relay device, the purpose of expanding the network coverage of the network device is achieved. At this time, a connection between the terminal and the network device is an indirect connection.

The RRC states of the terminal include the following: idle state, inactive state and connected state. When the terminal is in the connected state, if there is no data transmission demand, the terminal can return from the connected state to the inactive state, so as to faster resume the connected state later. However, at present, there is no relevant solution on how to resume the RRC connection for a terminal that enters an RRC inactive state under indirect connection.

EP3742815A1 discloses a method for recovering an RRC connection, wherein: a target base station receiving an RRC connection recovery request message sent by a terminal; the target base station determining, according to a UE identifier in the RRC connection recovery request message, a first node served by the terminal, and acquiring a UE context from the first node, wherein the UE context comprises a first UE context at the first node side and a second UE context at a second node side; and the target base station sending an RRC connection recovery message to the terminal, so that the terminal recovers an RRC connection.

US2018270892A1 discloses an operation method of a base station in a mobile communication network. The method comprises: determining to disconnect a radio resource control (RRC) connection; transmitting a RRC connection release message to a terminal; releasing the RRC connection with the terminal while maintaining an S1-U bearer set up between the base station and a serving gateway (S-GW); and releasing the S1-U bearer after maintaining the S1-U bearer for a first time.

### SUMMARY

The invention is set out in the appended set of claims. The present application provides a method and apparatus for RRC connection resuming of a terminal, which provides an RRC connection resume solution for a terminal that enters an RRC inactive state under indirect connection, and fills a gap in this technical direction.

In a first aspect, the present application provides a method for RRC connection resuming of a terminal, including:
sending, by a terminal, an RRC connection resume request message to a target network device, where the RRC connection resume request message carries first indication information, and the first indication information is used to indicate a connection mode of the terminal under an anchor network device;
where the terminal is a terminal in an RRC inactive state, the target network device is a network device serving the terminal when the terminal initiates RRC connection resuming, the anchor network device is a network device serving the terminal when the terminal enters the RRC inactive state, and the connection mode of the terminal under the anchor network device is a direct connection or an indirect connection, the direct connection refers to an RRC connection established between the terminal and the anchor network device through a Uu interface, and the indirect connection refers to an RRC connection established between the terminal and the anchor network device through a relay device.

Optionally, a prerequisite for carrying the first indication information in the RRC connection resume request message is that the terminal uses the indirect connection when entering the RRC inactive state under the anchor network device.

Optionally, the RRC connection resume request message carries the first indication information in an explicit mode, the explicit mode refers to adding a 1-bit indication information in the RRC connection resume request message, and the 1-bit indication information is used to indicate whether the connection mode of the terminal under the anchor network device is the direct connection or the indirect connection.

Optionally, the RRC connection resume request message further carries second indication information, and the second indication information is used to indicate a connection mode of the terminal under the target network device; where the connection mode of the terminal under the target network device is a direct connection or an indirect connection, the direct connection of the terminal under the target network device refers to an RRC connection established between the terminal and the target network device through the Uu interface, and the indirect connection of the terminal under the target network device refers to an RRC connection established between the terminal and the target network device through the relay device.

Optionally, the RRC connection resume request message carries the second indication information in an explicit or implicit mode.

Optionally, the explicit mode refers to adding a 1-bit indication information in the RRC connection resume request message and the 1-bit indication information is used to indicate whether the connection mode of the terminal under the target network device is the direct connection or the indirect connection.

Optionally, the implicit mode refers to indicating that the connection mode of the terminal under the target network device is the direct connection or the indirect connection by a path through which the RRC connection resume request message is transmitted under the target network device.

In a second aspect, the present application provides a method for RRC connection resuming of a terminal, including:
receiving, by a target network device, an RRC connection resume request message sent by a terminal, where the RRC connection resume request message carries first indication information, and the first indication information is used to indicate a connection mode of the terminal under an anchor network device;
where the terminal is a terminal in an RRC inactive state, the target network device is a network device serving the terminal when the terminal initiates the RRC connection resuming, the anchor network device is a network device serving the terminal when the terminal enters the RRC inactive state, and the connection mode of the terminal under the anchor network device is a direct connection or an indirect connection, the direct connection refers to an RRC connection established between the terminal and the anchor network device through a Uu interface, and the indirect connection refers to an RRC connection established between the terminal and the anchor network device through a relay device.

Optionally, a prerequisite for carrying the first indication information in the RRC connection resume request message is that the terminal uses the indirect connection when entering the RRC inactive state under the anchor network device.

Optionally, the RRC connection resume request message carries the first indication information in an explicit mode, the explicit mode refers to adding a 1-bit indication information in the RRC connection resume request message, and the 1-bit indication information is used to indicate whether the connection mode of the terminal under the anchor network device is the direct connection or the indirect connection.

Optionally, the RRC connection resume request message further carries second indication information, and the second indication information is used to indicate a connection mode of the terminal under the target network device; where the connection mode of the terminal under the target network device is a direct connection or an indirect connection, the direct connection of the terminal under the target network device refers to an RRC connection established between the terminal and the target network device through the Uu interface, and the indirect connection of the terminal under the target network device refers to an RRC connection established between the terminal and the target network device through the relay device.

Optionally, the RRC connection resume request message carries the second indication information in an explicit mode or an implicit mode.

Optionally, the explicit mode refers to adding a 1-bit indication information in the RRC connection resume request message and the 1-bit indication information is used to indicate whether the connection mode of the terminal under the target network device is the direct connection or the indirect connection.

Optionally, the implicit mode refers to indicating that the connection mode of the terminal under the target network device is the direct connection or the indirect connection by a path through which the RRC connection resume request message is transmitted under the target network device.

Optionally, the method further includes:
after receiving the RRC connection resume request message sent by the terminal, acquiring, by the target network device, context information of the terminal from the anchor network device of the terminal through an interface between network devices;
deleting, by the target network device, relay-related configuration information from the context information; and
sending, by the target network device, an RRC connection resume message to the terminal.

Optionally, the method further includes:
if the connection mode of the terminal under the target network device is indirect connection, determining, by the target network device, configuration information of the terminal related to a target relay device, wherein the target relay device is a relay device used by the terminal under the target network device.

Optionally, the method further includes:
after receiving the RRC connection resume request message sent by the terminal, directly rejecting, by the target network device, the RRC connection resuming of the terminal if it is determined according to the first indication information carried in the RRC connection resume request message that the connection mode used by the terminal under the anchor network device is the indirect connection.

In a third aspect, the present application provides an apparatus for RRC connection resuming of a terminal, including a memory, a transceiver and a processor;
where the memory is configured to store a computer program;
the transceiver is configured to send and receive data under control of the processor;
and the processor is configured to read the computer program in the memory and execute following operations:
   sending an RRC connection resume request message to a target network device, where the RRC connection resume request message carries first indication information, and the first indication information is used to indicate a connection mode of the terminal under an anchor network device;
   where the terminal is a terminal in an RRC inactive state, the target network device is a network device serving the terminal when the terminal initiates the RRC connection resuming, the anchor network device is a network device serving the terminal when the terminal enters the RRC inactive state, and the connection mode of the terminal under the anchor network device is a direct connection or an indirect connection, the direct connection refers to an RRC connection established between the terminal and the anchor network device through a Uu interface, and the indirect connection refers to an RRC connection established between the terminal and the anchor network device through a relay device.

Optionally, a prerequisite for carrying the first indication information in the RRC connection resume request message is that the terminal uses the indirect connection when entering the RRC inactive state under the anchor network device.

Optionally, the RRC connection resume request message carries the first indication information in an explicit mode, the explicit mode refers to adding a 1-bit indication information in the RRC connection resume request message, and the 1-bit indication information is used to indicate whether the connection mode of the terminal under the anchor network device is the direct connection or the indirect connection.

Optionally, the RRC connection resume request message further carries second indication information, and the second indication information is used to indicate a connection mode of the terminal under the target network device; where the connection mode of the terminal under the target network device is a direct connection or an indirect connection, the direct connection of the terminal under the target network device refers to an RRC connection established between the terminal and the target network device through the Uu interface, and the indirect connection of the terminal under the target network device refers to an RRC connection established between the terminal and the target network device through the relay device.

Optionally, the RRC connection resume request message carries the second indication information in an explicit or implicit mode.

Optionally, the explicit mode refers to adding a 1-bit indication information in the RRC connection resume request message and the 1-bit indication information is used to indicate whether the connection mode of the terminal under the target network device is the direct connection or the indirect connection.

Optionally, the implicit mode refers to indicating that the connection mode of the terminal under the target network device is the direct connection or the indirect connection by a path through which the RRC connection resume request message is transmitted under the target network device.

In a fourth aspect, the present application provides an apparatus for RRC connection resuming of a terminal, applied to a target network device for the terminal, including a memory, a transceiver and a processor;
where the memory is configured to store a computer program;
the transceiver is configured to send and receive data under control of the processor;
and the processor is configured to read the computer program in the memory and execute following operations:
   receiving an RRC connection resume request message sent by a terminal, where the RRC connection resume request message carries first indication information, and the first indication information is used to indicate a connection mode of the terminal under an anchor network device;
   where the terminal is a terminal in an RRC inactive state, the target network device is a network device serving the terminal when the terminal initiates the RRC connection resuming, the anchor network device is a network device serving the terminal when the terminal enters the RRC inactive state, and the connection mode of the terminal under the anchor network device is a direct connection or an indirect connection, the direct connection refers to an RRC connection established between the terminal and the anchor network device through a Uu interface, and the indirect connection refers to an RRC connection established between the terminal and the anchor network device through a relay device.

Optionally, a prerequisite for carrying the first indication information in the RRC connection resume request message is that the terminal uses the indirect connection when entering the RRC inactive state under the anchor network device.

Optionally, the RRC connection resume request message carries the first indication information in an explicit mode, the explicit mode refers to adding a 1-bit indication information in the RRC connection resume request message, and the 1-bit indication information is used to indicate whether the connection mode of the terminal under the anchor network device is the direct connection or the indirect connection.

Optionally, the RRC connection resume request message further carries second indication information, and the second indication information is used to indicate a connection mode of the terminal under the target network device; where the connection mode of the terminal under the target network device is a direct connection or an indirect connection, the direct connection of the terminal under the target network device refers to an RRC connection established between the terminal and the target network device through the Uu interface, and the indirect connection of the terminal under the target network device refers to an RRC connection established between the terminal and the target network device through the relay device.

Optionally, the RRC connection resume request message carries the second indication information in an explicit mode or an implicit mode.

Optionally, the explicit mode refers to adding a 1-bit indication information in the RRC connection resume request message and the 1-bit indication information is used to indicate whether the connection mode of the terminal under the target network device is the direct connection or the indirect connection.

Optionally, the implicit mode refers to indicating that the connection mode of the terminal under the target network device is the direct connection or the indirect connection by a path through which the RRC connection resume request message is transmitted under the target network device.

Optionally, the processor is further configured to perform the following operations:
if the connection mode of the terminal under the target network device is the indirect connection, determining configuration information of the terminal related to a target relay device, where the target relay device is a relay device used by the terminal under the target network device.

Optionally, the processor is further configured to perform the following operations:
after receiving the RRC connection resume request message sent by the terminal, acquiring context information of the terminal from the anchor network device of the terminal through an interface between network devices;
deleting relay-related configuration information from the context information; and
sending an RRC connection resume message to the terminal.

Optionally, the processor is further configured to perform the following operations:
after receiving the RRC connection resume request message sent by the terminal, directly rejecting the RRC connection resuming of the terminal if it is determined, according to the first indication information carried in the RRC connection resume request message, that the connection mode used by the terminal under the anchor network device is the indirect connection.

In a fifth aspect, the present application provides an apparatus for RRC connection resuming of a terminal, including:
a sending unit, configured to send an RRC connection resume request message to a target network device, where the RRC connection resume request message carries first indication information, and the first indication information is used to indicate a connection mode of the terminal under an anchor network device;
where the terminal is a terminal in an RRC inactive state, the target network device is a network device serving the terminal when the terminal initiates the RRC connection resuming, the anchor network device is a network device serving the terminal when the terminal enters the RRC inactive state, and the connection mode of the terminal under the anchor network device is a direct connection or an indirect connection, the direct connection refers to an RRC connection established between the terminal and the anchor network device through a Uu interface, and the indirect connection refers to an RRC connection established between the terminal and the anchor network device through a relay device.

Optionally, a prerequisite for carrying the first indication information in the RRC connection resume request message is that the terminal uses the indirect connection when entering the RRC inactive state under the anchor network device.

Optionally, the RRC connection resume request message carries the first indication information in an explicit mode, the explicit mode refers to adding a 1-bit indication information in the RRC connection resume request message, and the 1-bit indication information is used to indicate whether the connection mode of the terminal under the anchor network device is the direct connection or the indirect connection.

Optionally, the RRC connection resume request message further carries second indication information, and the second indication information is used to indicate a connection mode of the terminal under the target network device; where the connection mode of the terminal under the target network device is a direct connection or an indirect connection, the direct connection of the terminal under the target network device refers to an RRC connection established between the terminal and the target network device through the Uu interface, and the indirect connection of the terminal under the target network device refers to an RRC connection established between the terminal and the target network device through the relay device.

Optionally, the RRC connection resume request message carries the second indication information in an explicit or implicit mode.

Optionally, the explicit mode refers to adding a 1-bit indication information in the RRC connection resume request message and the 1-bit indication information is used to indicate whether the connection mode of the terminal under the target network device is the direct connection or the indirect connection.

Optionally, the implicit mode refers to indicating that the connection mode of the terminal under the target network device is the direct connection or the indirect connection by a path through which the RRC connection resume request message is transmitted under the target network device.

In a sixth aspect, the present application provides an apparatus for RRC connection resuming of a terminal, applied to a target network device for the terminal, including;
a receiving unit, configured to receive an RRC connection resume request message sent by a terminal, where the RRC connection resume request message carries first indication information, and the first indication information is used to indicate a connection mode of the terminal under an anchor network device;
where the terminal is a terminal in an RRC inactive state, the target network device is a network device serving the terminal when the terminal initiates the RRC connection resuming, the anchor network device is a network device serving the terminal when the terminal enters the RRC inactive state, and the connection mode of the terminal under the anchor network device is a direct connection or an indirect connection, the direct connection refers to an RRC connection established between the terminal and the anchor network device through a Uu interface, and the indirect connection refers to an RRC connection established between the terminal and the anchor network device through a relay device.

Optionally, a prerequisite for carrying the first indication information in the RRC connection resume request message is that the terminal uses the indirect connection when entering the RRC inactive state under the anchor network device.

Optionally, the RRC connection resume request message carries the first indication information in an explicit mode, the explicit mode refers to adding a 1-bit indication information in the RRC connection resume request message, and the 1-bit indication information is used to indicate whether the connection mode of the terminal under the anchor network device is the direct connection or the indirect connection.

Optionally, the RRC connection resume request message further carries second indication information, and the second indication information is used to indicate a connection mode of the terminal under the target network device; where the connection mode of the terminal under the target network device is a direct connection or an indirect connection, the direct connection of the terminal under the target network device refers to an RRC connection established between the terminal and the target network device through the Uu interface, and the indirect connection of the terminal under the target network device refers to an RRC connection established between the terminal and the target network device through the relay device.

Optionally, the RRC connection resume request message carries the second indication information in an explicit mode or an implicit mode.

Optionally, the explicit mode refers to adding a 1-bit indication information in the RRC connection resume request message and the 1-bit indication information is used to indicate whether the connection mode of the terminal under the target network device is the direct connection or the indirect connection.

Optionally, the implicit mode refers to indicating that the connection mode of the terminal under the target network device is the direct connection or the indirect connection by a path through which the RRC connection resume request message is transmitted under the target network device.

Optionally, the apparatus further includes:
a processing unit, configured to: if the connection mode of the terminal under the target network device is the indirect connection, determine configuration information of the terminal related to a target relay device, where the target relay device is a relay device used by the terminal under the target network device.

Optionally, the apparatus further includes: a processing unit and a sending unit,
the receiving unit is further configured to: acquire context information of the terminal from the anchor network device of the terminal through an interface between network devices after receiving the RRC connection resume request message sent by the terminal;
the processing unit is configured to delete relay-related configuration information from the context information; and
the sending unit is configured to send an RRC connection resume message to the terminal.

Optionally, the apparatus further includes:
a processing unit, configured to: after the receiving unit receives the RRC connection resume request message sent by the terminal, directly reject the RRC connection resuming of the terminal if it is determined, according to the first indication information carried in the RRC connection resume request message, that the connection mode used by the terminal under the anchor network device is the indirect connection.

In a seventh aspect, the present application provides a processor-readable storage medium, where the processor-readable storage medium has a computer program stored thereon, and the computer program is used to enable the processor to execute the method according to the first or second aspect.

In an eighth aspect, the present application provides a computer program product, including a computer program, where when the computer program is executed by a processor, the method according to the first or second aspect is implemented.

In a ninth aspect, the present application provides a system for RRC connection resuming of a terminal, including the target network device and at least one terminal as described in any one of the above.

The present application provides a method and apparatus for RRC connection resuming of a terminal, a terminal which is in an RRC inactive state sends an RRC connection resume request message carrying first indication information to a target network device, where the first indication information is used to indicate a connection mode of the terminal under an anchor network device is a direct connection or an indirect connection, so that the target network device processes the RRC connection resume request of the terminal according to the connection mode of the terminal under the anchor network device. Therefore, the present application provides an RRC connection resume solution for a terminal that enters the RRC inactive state under indirect connection, filling a gap in this technical direction.

It should be understood that what is described in the summary above is not intended to limit key or important features of embodiments of the present application, nor is it intended to limit the scope of the present application. Other features of the present application will be easily understood through the following description.

### BRIEF DESCRIPTION OF DRAWINGS

FIG. 1 is a schematic diagram of an application scenario according to an embodiment of the present application.
FIG. 2 is a flow chart of a method for RRC connection resuming of a terminal according to an embodiment of the present application.
FIG. 3 is a flow chart of a method for RRC connection resuming of a terminal according to another embodiment of the present application.
FIG. 4 is a flow chart of a method for RRC connection resuming of a terminal according to another embodiment of the present application.
FIG. 5 is a structure schematic diagram of an apparatus for RRC connection resuming of a terminal according to an embodiment of the present application.
FIG. 6 is a structure schematic diagram of an apparatus for RRC connection resuming of a terminal according to another embodiment of the present application.
FIG. 7 is a structure schematic diagram of an apparatus for RRC connection resuming of a terminal according to another embodiment of the present application.
FIG. 8 is a structure schematic diagram of an apparatus for RRC connection resuming of a terminal according to another embodiment of the present application.

### DESCRIPTION OF EMBODIMENTS

The term "and/or" in the present application is an association relationship describing associated objects, and represents that there may be three relationships. For example, A and/or B may represent three situations: presence of A only, presence of both A and B, and presence of B only. The character "/" herein generally represents an "or" relationship between contextual objects.

The term "plurality" in the present application refers to two or more than two, and other quantifiers are similar.

The technical solutions in the embodiments of the present application will be described as follows clearly and completely in conjunction with accompanying drawings in the embodiments of the present application. Apparently, the described embodiments are merely a part rather than all of the embodiments of the present application.

An embodiment of the present application provides a method and apparatus for RRC connection resuming of a terminal. When the terminal is in an RRC inactive state, it can initiate the RRC connection resuming to a target network device, where the terminal sends an RRC connection resume request message carrying first indication information to the target network device, which is used to indicate a connection mode of the terminal under an anchor network device, so that the target network device processes the RRC connection resuming initiated by the terminal according to the connection mode of the terminal under the anchor network device. Therefore, the present application provides an RRC connection resume solution for a terminal that enters the RRC inactive state under indirect connection, filling a gap in this technical direction.

The method and the apparatus are based on the same application concept. Since the method and the apparatus solve the problem with similar principles, reference can be made to each other for the implementation of the apparatus and the method, and the repetition is not repeated.

The technical solutions according to the embodiments of the present application can be applied to various systems, especially 5G systems. For example, an applicable system can be: a global system of mobile communication (GSM), a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems all include terminals and network devices. The system may also include a core network portion, such as an evolved packet system (EPS), a 5G system (5GS), etc.

The terminal involved in the embodiments of the present application may be a device that provides voice and/or data connectivity to a user, a handheld device with a wireless connection function, or other processing devices connected to a wireless modem. The name of the terminal may also vary in different systems. For example, in a 5G system, the terminal may be called user equipment (UE). A wireless terminal may communicate with one or more core networks (CN) via a radio access network (RAN). The wireless terminal may be a mobile terminal, such as a cell phone (or "cellular" phone) and a computer with a mobile terminal, for example, a portable, pocket-sized, handheld, computer built-in, or vehicle-mounted mobile device, that exchanges language and/or data with the radio access network. For example, a personal communication service (PCS) terminal, a cordless phone, a session initiated protocol (SIP) phone, a wireless local loop (WLL) station, a personal digital assistant (PDA) or other devices. The wireless terminal can also be called a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, which may include a plurality of cells providing services to the terminal. Depending on the specific application, the base station can also be called an access point, or a device in the access network that communicates with the wireless terminal through one or more sectors on an air interface, or other names. The network device may be used to interchange a received air frame with an Internet protocol (IP) packet, and may act as a router between the wireless terminal and the rest of the access network, the rest of the access network may include an Internet protocol (IP) communication network. The network device may also coordinate the management of attributes of the air interface. For example, the network device involved in the embodiments of the present application may be a base station (Base Transceiver Station, BTS) in a global system for mobile communications system (GSM) or code division multiple access (CDMA), or a network device (NodeB) in a Wide-band Code Division Multiple Access (WCDMA), or an evolutional network device (evolutional Node B, eNB or e-NodeB) in a long term evolution (LTE) system, or a 5G base station (gNB) in a 5G network architecture (next generation system), or a home evolved base station (Home evolved Node B, HeNB), or a relay node, a home base station (femto), a pico base station (pico), etc., which are not limited in the embodiments of the present application. In some network structures, the network device may include a centralized unit (CU) node and a distributed unit (DU) node, and the centralized unit and the distributed unit may also be geographically separated.

The network device and the terminal can use one or more antennas respectively for multi input multi output (MIMO) transmission, and the MIMO transmission can be single user MIMO (SU-MIMO) or multiple user MIMO (MU-MIMO). According to the shape and the number of the antenna combinations, the MIMO transmission can be 2D-MIMO, 3D-MIMO, FD-MIMO or massive-MIMO, or can be diversity transmission, pre-coded transmission or beamforming transmission, etc.

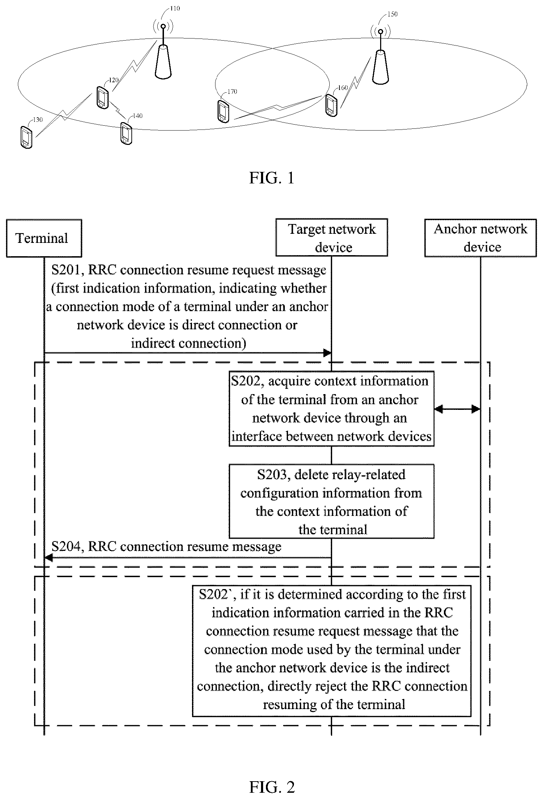

FIG. 1 is a schematic diagram of an application scenario according to an embodiment of the present application. As shown in FIG. 1, the embodiment provides a communication system 100, which includes a plurality of network devices and a plurality of terminals. In this embodiment, two network devices and five terminal devices are taken as examples, and the network devices are network device 110 and network device 150 respectively.

A terminal 120 is within the coverage of the network device 110, and signal quality received by the terminal 120 from the network device 110 is good. The terminal 120 is directly connected to the network device 110 through a Uu interface, that is, the terminal 120 and the network device 110 can transmit uplink and downlink data/control information through the Uu interface, or it can also be called that the terminal 120 communicates with the network device 110 through direct (direct) connection, that is, the connection mode of the terminal 120 under the network device 110 is the direct connection. The terminal 160 is similar to the network device 150.

In some cases, the terminal 130 is outside the coverage of the network device 110, and the terminal 130 cannot receive the signal from the network device 110. If the terminal 130 wants to communicate with the network device 110, the terminal 130 can establish a direct communication link (also known as Sidelink or PC5) with the terminal 120 by using the terminal 120 within a close range as a relay device. The terminal 130 is connected to the network device 110 through the terminal 120 as the relay device, which is also called indirect connection.

In other cases, the terminal 140 is in an edge of the coverage of the network device 110, and the terminal 140 can receive the signal from the network device 110, but the signal quality is poor. The terminal 140 can also establish a direct communication link (also known as Sidelink or PC5) with the terminal 120 by using the terminal 120 within a close range as a relay device. The terminal 140 is connected to the network device 110 through the terminal 120 as the relay device, which is also called the indirect connection.

A wireless interface corresponding to a direct communication link is called a direct communication interface (also known as the Sidelink interface or the PC5 interface). A link between the terminal 120 as the relay device and the network device 110 may be called a backhaul link for the terminal 130 or the terminal 140.

In addition, for how the terminal 170 communicates with network device 150 through the terminal 160, it may refer to the terminal 130 or the terminal 140 communicating with the network device 110 through the terminal 120.

The RRC states of the terminal include the following: idle state, inactive state and connected state. When the terminal 140 is in the connected state, if there is no data transmission demand, for example, if a user has not used the terminal 140 for a long time, the terminal 140 returns from the connected state to the RRC inactive state, so as to faster resume the connected state later. When the terminal 140 which is in an RRC inactive state moves to a position of terminal 160, the terminal 140 is within a direct coverage of network device 150, and the terminal 140 can communicate directly with the network device 150, or when the terminal 140 which is in an RRC inactive state moves to the position of terminal 170, the terminal 140 is within a coverage of terminal 160, and the terminal 140 can communicate indirectly with the network device 150 through the terminal 160. Since the terminal 140 enters the RRC inactive state under the network device 110, and the terminal 140 has moved out of a range of communicating with the network device 110 and into the range of communicating with the network device 150, at this time, if the terminal 140 has data transmission requirements, it is necessary to resume RRC connection. To address this need, the technical solution of the present application can be adopted. The technical solution is described in detail in the following examples.

FIG. 2 is a flow chart of a method for RRC connection resuming of a terminal according to an embodiment of the present application, as shown in FIG. 2, the method of this embodiment can include: S201, the terminal sends an RRC connection resume request message to the target network device. Accordingly, the target network device receives the RRC connection resume request message sent by the terminal.

In this embodiment, the terminal is a terminal in an RRC inactive state, and the network device that serves the terminal when the terminal enters the RRC inactive state is called an anchor network device. The connection mode of the terminal under the anchor network device can be a direct connection or an indirect connection. The direct connection refers to an RRC connection established between the terminal and the anchor network device through a Uu interface, and the indirect connection refers to an RRC connection established between the terminal and the anchor network device through a relay device. The relay device can be a terminal or a network device, which is not limited in the embodiments of the present application.

The process of the terminal entering the RRC inactive state can be as follows: the anchor network device of the terminal sends information for indicating the entry into the RRC inactive state to the terminal through the Uu interface, the terminal receives the information from the anchor network device of the terminal through the Uu interface, and enters the RRC inactive state according to the information. It can also be said that the terminal uses a direct connection when entering the RRC inactive state under the anchor network device of the terminal. Or,
the process of the terminal entering the RRC inactive state can be as follows: the anchor network device of the terminal sends information for indicating the entry into the RRC inactive state to the terminal through the relay device, the terminal receives the information from the anchor network device of the terminal through the relay device, and the terminal enters the RRC inactive state according to the information. It can also be said that the terminal uses an indirect connection when entering the RRC inactive state under the anchor network device of the terminal.

When the terminal in the RRC inactive state has data transmission requirements, the terminal needs to resume the RRC connection. At this time, the terminal is directly within a coverage of the target network device, or the terminal is in the coverage of the target network device through the relay device, so a network device serving the terminal is the target network device, indicating that the network device serving the terminal has changed, that is, from the anchor network device of the terminal to the target network device of the terminal. Therefore, the terminal sends an RRC connection resume request message to a target network device of the terminal, where the RRC connection resume request message carries first indication information, and the first indication information is used to indicate a connection mode of the terminal under an anchor network device. Of course, the case that the anchor network device and the target network device are the same network device is also within the scope of protection of this application.

One implementation for the terminal to send the RRC connection resume request message to the target network device of the terminal is: the terminal directly sends the RRC connection resume request message to the target network device of the terminal through the Uu interface. Accordingly, the target network device of the terminal receives the RRC connection resume request message sent by the terminal.

Another implementation for the terminal to send the RRC connection resume request message to the target network device of the terminal is: the terminal sends the RRC connection resume request message to the target network device of the terminal, and the relay device of the terminal forwards the RRC connection resume request message to the target network device of the terminal. Accordingly, the target network device of the terminal receives the RRC connection resume request message from the terminal forwarded by the relay device of the terminal.

The method for RRC connection resuming of a terminal provided by the present application, a terminal which is in an RRC inactive state sends an RRC connection resume request message carrying first indication information to a target network device, where the first indication information is used to indicate a connection mode of the terminal under an anchor network device of the terminal is a direct connection or an indirect connection, so that the target network device of the terminal processes the RRC connection resume request of the terminal according to the connection mode of the terminal under the anchor network device of the terminal. Therefore, the present application provides an RRC connection resume solution for a terminal that enter the RRC inactive state under indirect connection, filling a gap in this technical direction.

On the basis of the above embodiments, in an optional embodiment, a prerequisite for carrying the first indication information in the RRC connection resume request message is that the terminal uses an indirect connection when entering the RRC inactive state under the anchor network device of the terminal. Specifically, if the terminal uses an indirect connection when entering the RRC inactive state under the anchor network device of the terminal, when the terminal needs to resume the RRC connection, the terminal sends an RRC connection resume request carrying first indication information to a target network device, and accordingly, the target network device of the terminal determines, according to the RRC connection resume request with carrying the first indication information, that the terminal uses the indirect connection when entering the RRC inactive state under the anchor network device of the terminal. If the terminal uses an indirect connection when entering the RRC active state under the anchor network device of the terminal, when the terminal needs to resume the RRC connection, the terminal sends an RRC connection resume request not carrying the first indication information to a target network device, and accordingly, the target network device of the terminal determines, according to the RRC connection resume request without carrying the first indication information, that the terminal uses the direct connection when entering the RRC inactive state under the anchor network device of the terminal.

In an optional embodiment, the RRC connection resume request message carries the first indication information in an explicit mode, the explicit mode refers to adding a 1-bit indication information in the RRC connection resume request message, and the newly added 1-bit indication information is used to indicate whether the connection mode of the terminal under the anchor network device of the terminal is the direct connection or the indirect connection. For example, when the newly added 1-bit indication is 0, it means that the connection mode of the terminal under the anchor network device of the terminal is the direct connection; when the newly added 1-bit indication is 1, it means that the connection mode of the terminal under the anchor network device of the terminal is the indirect connection; or, for example, when the newly added 1-bit indication is 1, it means that the connection mode of the terminal under the anchor network device of the terminal is the direct connection, and when the newly added 1-bit indication is 0, it means that the connection mode of the terminal under the anchor network device of the terminal is the indirect connection. For another example, the new 1-bit indicator is optional (Optional). If it appears, it means the indirect connection. If it does not appear, it means the direct connection.

Accordingly, after receiving the RRC connection resume request message, the target network device of the terminal determines, according to the newly added 1-bit indication information (first indication information) in the RRC connection resume request message, whether the connection mode of the terminal under the anchor network device of the terminal is the direct connection or the indirect connection.

In an optional embodiment, the RRC connection resume request message further carries second indication information, and the second indication information is used to indicate a connection mode of the terminal under the target network device of the terminal; where the connection mode of the terminal under the target network device of the terminal is a direct connection or an indirect connection, the direct connection of the terminal under the target network device of the terminal refers to an RRC connection established between the terminal and the target network device of the terminal through the Uu interface, and the indirect connection of the terminal under the target network device of the terminal refers to an RRC connection established between the terminal and the target network device of the terminal through the relay device. Accordingly, the target network device of the terminal determines whether the connection mode of the terminal under the target network device of the terminal is the direct connection or the indirect connection according to the RRC connection resume request message.

Optionally, the RRC connection resume request message carries the second indication information in an explicit or implicit mode.

The explicit mode refers to adding a 1-bit indication information in the RRC connection resume request message and the newly added 1-bit indication information is used to indicate whether the connection mode of the terminal under the target network device of the terminal is the direct connection or the indirect connection. For example, when the newly added 1-bit indication information is 0, it means that the connection mode of the terminal under the target network device of the terminal is direct connection; when the newly added 1-bit indication information is 1, it means that the connection mode of the terminal under the target network device of the terminal is the indirect connection; or, for example, when the newly added 1-bit indication information is 1, it means that the connection mode of the terminal under the target network device of the terminal is the direct connection, and when the newly added 1-bit indication information is 0, it means that the connection mode of the terminal under the target network device of the terminal is the indirect connection. For another example, the new 1 bit indicator is optional (Optional). If it appears, it means the indirect connection. If it does not appear, it means the direct connection.

Accordingly, after receiving the RRC connection resume request message, the target network device of the terminal determines whether the connection mode of the terminal under the anchor network device of the terminal device is the direct connection or the indirect connection according to the newly added 1-bit indication information (second indication information) in the RRC connection resume request message.

The implicit mode refers to indicating that the connection mode of the terminal under the target network device of the terminal is the direct connection or the indirect connection by a path through which the RRC connection resume request message is transmitted under the target network device of the terminal.

For example, the path through which the RRC connection resume request message is transmitted under the target network device of the terminal does not include a target relay device, which means that the connection mode of the terminal under the target network device of the terminal is the direct connection. That is, the terminal directly sends the RRC connection resume request message to the target network device of the terminal through the Uu interface. Accordingly, the target network device of the terminal directly receives the RRC connection resume request message sent by the terminal through the Uu interface. The target network device of the terminal determines that the connection mode of the terminal under the target network device of the terminal is the direct connection according to the RRC connection resume request message sent by the terminal being directly received through the Uu interface.

For example, the path through which the RRC connection resume request message is transmitted under the target network device of the terminal includes a target relay device, which means that the connection mode of the terminal under the target network device of the terminal is the indirect connection. The target relay device is a relay device used by the terminal under the target network device of the terminal. That is, the terminal sends the RRC connection resume request message to the target relay device of the terminal, and the target relay device of the terminal forwards the RRC connection resume request message sent by the terminal to the target network device of the terminal. Accordingly, the target network device of the terminal receives the RRC connection resume request message from the terminal forwarded by the target relay device of the terminal. The target network device of the terminal determines that the connection mode of the terminal under the target network device of the terminal is the indirect connection according to the RRC connection resume request message sent by the terminal being received by the target relay device of the terminal.

Optionally, if the second indication information indicates that the connection mode of the terminal under the target network device of the terminal is the indirect connection, the target network device of the terminal further determines configuration information of the terminal related to the target relay device of the terminal after receiving the RRC connection resume request message carrying the second indication information. The target relay device of the terminal is a relay device used by the terminal under the target network device of the terminal.

On the basis of any of the above embodiments, in one possible embodiment, after executing the above S201, S202 can also be included.

S202, the target network device acquires context information of the terminal from an anchor network device through an interface between network devices.

In this embodiment, after receiving the RRC connection resume request message sent by the terminal, the target network device of the terminal sends a UE context request message (UE context request message) to the anchor network device of the terminal through an interface between the target network device of the terminal and the anchor network device of the terminal. For example, taking an NR system as an example, the UE context request message can a RETRIEVE UE CONTEXT REQUEST. Accordingly, after receiving the UE context request message, the anchor network device of the terminal sends the context information of the terminal to the target network device of the terminal.

Optionally, if the anchor network device of the terminal receives the UE context request message sent by the target network device of the terminal, it may also delete relay-related configuration information from the context information of the terminal, and then send context information of the terminal after deleting the relay-related configuration information to the target network device of the terminal. After the target network device of the terminal obtains the context information of the terminal after deleting the relay-related configuration information from the anchor network device of the terminal, it can directly execute S204 instead of S203.

S203, the target network device deletes relay-related configuration information from the context information.

In this embodiment, after receiving the context information of the terminal sent by the anchor network device of the terminal, the target network device of the terminal deletes the relay-related configuration information from the context information of the terminal. The relay-related configuration information, for example, may be relay configuration information related to a source relay device of the terminal.

In one possible implementation, the target network device of the terminal determines whether the context information of the terminal obtained from the anchor network device of the terminal includes the relay-related configuration information. If so, the target network device of the terminal deletes the relay-related configuration information from the context information of the terminal.

In another possible implementation, the target network device of the terminal determines that the connection mode used when the terminal enters the RRC inactive state under the anchor network device of the terminal is the indirect connection according to the first information, and the target network device of the terminal deletes the relay-related configuration information from the context information of the terminal.

S204, the target network device sends an RRC connection resume message to the terminal.

In this embodiment, the target network device of the terminal sends a response message corresponding to the RRC connection resume request message to the terminal according to the above processed context information of the terminal. In this embodiment, the target network device of the terminal agrees to resume the RRC connection with the UE. The response message can be either the RRC connection resume message (RRC Resume message) or the RRC connection reconfiguration message.

If the connection mode used by the terminal under the target network device of the terminal is the direct connection, the target network device of the terminal directly sends a response message corresponding to the RRC connection resume request message to the terminal through the Uu interface. If the connection mode used by the terminal under the target network device of the terminal is the indirect connection, the target network device of the terminal sends the response message corresponding to the RRC connection resume request message to the terminal through a forwarding of the target relay device of the terminal.

After receiving the RRC connection resume message or the RRC reconfiguration message sent by the target network device of the terminal, the terminal enters an RRC connected state and completes the resuming of the terminal from the RRC inactive state to the RRC connected state.

Therefore, in this embodiment, a terminal which is in an RRC inactive state sends an RRC connection resume request message carrying first indication information to a target network device, and the first indication information is used to indicate an connection mode used when the terminal enters the RRC inactive state under the anchor network device of the terminal is the direct connection or the indirect connection, then the target network device of the terminal acquires the context information of the terminal from the anchor network device, deletes the relay-related configuration information within it, and then send the RRC connection resume message to the terminal. No matter whether the connection mode used when the terminal enters the RRC inactive state under the anchor network device of the terminal is the direct connection or the indirect connection, the target network device of the terminal will allow the terminal to resume the RRC connection.

On the basis of the above embodiments, in an optional embodiment, after the execution of the above S201, if the connection mode used when the terminal enters the RRC inactive state under the anchor network device of the terminal is the direct connection, the above S202-204 will not be executed, but S202' will be executed.

S202': if it is determined according to the first indication information carried in the RRC connection resume request message that the connection mode used by the terminal under the anchor network device is the indirect connection, the target network device directly rejects the RRC connection resuming of the terminal.

In this embodiment, after the target network device of the terminal receives the RRC connection resume request message carrying the first indication information sent by the terminal, if it is determined according to the first indication information that the connection mode used by the terminal under the anchor network device of the terminal is the indirect connection, the target network device of the terminal directly rejects the RRC connection resuming of the terminal, for example, the target network device of the terminal sends an RRC connection establishment message or RRC connection release message or RRC connection rejection message to the terminal.

If the connection mode used by the terminal under the target network device of the terminal is the direct connection, the target network device of the terminal directly sends the RRC connection establishment message or the RRC connection release message or the RRC connection rejection message to the terminal through the Uu interface. If the connection mode used by the terminal under the target network device of the terminal is the indirect connection, the target network device of the terminal sends the RRC connection establishment message or RRC connection release message or RRC connection rejection message to the terminal through a forwarding of the target relay device of the terminal.

Optionally, if the target network device of the terminal determines according to the first indication information that the connection mode used by the terminal under the anchor network device is the direct connection, the target network device of the terminal can execute the above S202-S204.

Therefore, in this embodiment, a terminal which is in an RRC inactive state sends an RRC connection resume request message carrying the first indication information to a target network device of the terminal, if the first indication information indicates that an connection mode when the terminal enters the RRC inactive state under the anchor network device of the terminal is the direct connection, the target network device of the terminal directly rejects the RRC connection resuming of the terminal.

The solution of the present application is illustrated by two specific examples below, and a terminal can be called UE.

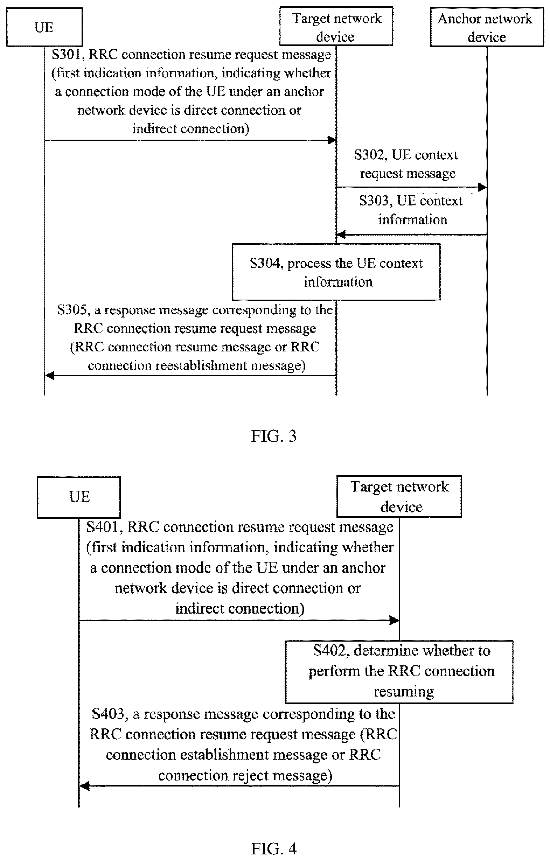

FIG. 3 is a flow chart of a method for RRC connection resuming of a terminal according to another embodiment of the present application. In this embodiment, UE uses an indirect connection to enter an RRC inactive state under an anchor network device of the UE, and a target network device of the UE allows the UE to resume the RRC connection. As shown in FIG. 3, the method of this embodiment can include the following steps.

S301, the UE sends an RRC connection resume request message to the target network device.

In this embodiment, the UE accesses a network through a source relay device of the UE. If the UE has no data transmission requirements, the network device can let the UE enter an RRC inactive state (RRC_INACTIVE state), and the network device that is connected when the UE enters the RRC_INACTIVE state is called an anchor network device of the UE.

As the UE moves, the UE enters a coverage of a target network device of UE or a coverage of a relay device under the target network device of the UE. Once the UE has data transmission requirements, the UE can directly initiate the RRC connection resuming to the target network device of the UE through a Uu interface or through a relay device managed by the target network device of the UE. Take an NR system as an example, a specific RRC connection resume request message can be an RRC Resume Request message or an RRCResumeRequest1.

It should be noted that when the UE initiates the RRC connection resuming under the target network device of the UE, it needs to indicate to the target network device of the UE, a connection mode used when the UE enters the RRC_INACTIVE state under the anchor network device. The connection mode can be a direct connection (direct connection) or an indirect connection (indirect connection).

Optionally, a prerequisite for "when the UE initiates the RRC connection resume under the target network device of the UE, it needs to indicate to the target network device of the UE, a connection mode used when the UE enters the RRC_INACTIVE state under the anchor network device of the UE" can be: the UE uses the indirect connection when entering the RRC_INACTIVE state under the anchor network device of the UE.

Optionally, the UE may further indicate a connection mode used by the UE under the target network device of the UE to the target network device of the UE.

The specific indication mode for "UE initiates the RRC connection resume under the target network device of the UE, it needs to indicate to the target network device of the UE a connection mode used when the UE enters the RRC_INACTIVE state under the anchor network device of the UE" can be an explicit indication, that is, the UE directly carries 1 bit indication information in the RRC connection resume request message.

The specific indication mode for "UE may further indicate a connection mode used by the UE under the target network device of the UE to the target network device of the UE" may be indicated in the following two modes:

Explicit indication mode: specifically, it refers to the UE directly carrying the indication information in the RRC connection resume request message.

Implicit indication mode: specifically, it refers to when transmitting the RRC connection resume request message of the UE to the target network device of the UE, whether a relay device is passed through to implicitly indicate whether the UE accesses the network through direct or indirect connection.

S302, the target network device sends a UE context request message to an anchor network device.

After receiving the RRC connection resume request message sent by the UE, the target network device of the UE sends a UE context request to the anchor network device of the UE through an interface between network devices (such as an Xn interface between base stations). Take an NR system as an example, a specific UE context request message can be a RETRIEVE UE CONTEXT REQUEST.

Take an NR system as an example, the UE context request process can follow a UE context request process of an existing NR system, which will not be repeated here.

S303, the anchor network device sends UE context information to the target network device through an interface between the network devices.

In this embodiment, the anchor network device of the UE can directly send a UE context to the target network device of the UE through the interface between network devices (such as the Xn interface between base stations) without processing the UE context information (UE context). For example, for the NR system, the message may be a RETRIEVE UE CONTEXT RESPONSE message.

S304, the target network device processes the UE context information.

In this embodiment, the target network device of the UE receives the UE context sent by the anchor network device of the UE through the interface between network devices (such as an interface between base stations).

Then the target network device of the UE performs one of the following operations:
the target network device of the UE directly determines whether the UE context contains relay-related configuration information, if contains, it directly deletes the relay-related configuration information from the UE context.

According to the connection mode used by the UE when entering the RRC_INACTIVE state under the anchor network device indicated by the UE to the target network device of the UE in S301, a judgment is made and a response operation is performed. For example, if the connection mode used by the UE in the anchor network device of the UE is the indirect connection, the target network device of the UE deletes the relay-related configuration information of UE from the UE context, and then generates the response message corresponding to the RRC connection resume request message.

S305, the target network device sends the response message corresponding to the RRC connection resume request message to the UE.

For the NR system, the response message can be an RRC Resume message. According to the connection mode used by the UE under the target network device of the UE indicated by the UE to the target network device of the UE in S301, if the connection mode is the direct connection, the response message corresponding to the RRC connection resume request message can be directly sent through the Uu interface. If the connection mode is the indirect connection, the response message corresponding to the RRC connection resume request message can be relayed by the relay device.

The method for RRC connection resuming of a terminal provided by this embodiment, if the information carried by the UE when requesting the resuming of the RRC connection from the target network device of the UE indicates that: the connection mode used when the UE enters the RRC_INACTIVE state under the anchor network device of the UE is the indirect connection, the target network device of the UE acquires the UE context from the anchor network device of the UE and processes it according to the indirect connection, and then sends a response message to the UE to indicate that the UE is allowed to resume the RRC connection, so as to complete the UE's resuming from the RRC_INACTIVE state back to the RRC_CONNECTED state.

FIG. 4 is a flow chart of a method for RRC connection resuming of a terminal according to another embodiment of the present application. In this embodiment, UE uses an indirect connection to enter an RRC inactive state under an anchor network device of the UE, and a target network device of the UE rejects the UE to resume the RRC connection. As shown in FIG. 4, the method of this embodiment can include the following steps.

S401, the UE sends an RRC connection resume request message to the target network device.

Firstly, the UE accesses a network through a source relay device of UE. If the UE has no data transmission requirements, the network device can let the UE enter an RRC_INACTIVE state, and the network device that is connected when the UE enters the RRC_INACTIVE state is called an anchor network device of the UE.

As the UE moves, the UE enters a coverage of a target network device or a coverage of a relay device under the target network device. Once the UE has data transmission requirements, the UE can directly initiate the RRC connection resuming to the target network device of the UE through a Uu interface or through a target relay device managed by the target network device of the UE. Take an NR system as an example, a specific RRC connection resume request message can be an RRC Resume Request message or an RRCResumeRequest1.

It should be noted that when the UE initiates the RRC connection resuming under the target network device of the UE, it needs to indicate to the target network device of the UE, a connection mode used when the UE enters the RRC_INACTIVE state under the anchor network device of the UE. The connection mode can be a direct or an indirect connection.

Optionally, a prerequisite for "when the UE initiates the RRC connection resume under the target network device of UE, it needs to indicate to the target network device of UE, a connection mode used when the UE enters the RRC_INACTIVE state under the anchor network device of UE" can be: the UE uses the indirect connection when entering the RRC_INACTIVE state under the anchor network device of UE.

Optionally, the UE may further indicate a connection mode used by the UE under the target network device of the UE to the target network device of the UE.

The specific indication mode for "UE initiates the RRC connection resume under the target network device of the UE, it needs to indicate to the target network device of the UE a connection mode used when the UE enters the RRC_INACTIVE state under the anchor network device of the UE" can be an explicit indication, that is, the UE directly carries 1 bit indication information in the RRC connection resume request message.

The specific indication mode for "UE may further indicate a connection mode used by the UE under the target network device of the UE to the target network device of the UE" may be indicated in the following two modes:

Explicit indication mode: specifically, it refers to the UE directly carrying the indication information in the RRC connection resume request message.

Implicit indication mode: specifically, it refers to when transmitting the RRC connection resume request message of the UE, whether a relay is passed through to implicitly indicate whether the UE accesses the network through direct or indirect connection.

S402, the target network device determines whether to perform the RRC connection resuming.

According to the RRC connection resume request message received in S401, the target network device of the UE determines that the UE is accessed through the indirect connection under the anchor network device of the UE, and then determines to directly reject the RRC connection resume request of UE.

S403, the target network device sends a response message corresponding to the RRC connection resume request message to the UE.

If the target network device of the UE decides to reject the RRC connection resume of UE in S402, the target network device of the UE can send an RRC connection establishment message or an RRC connection release message or an RRC connection rejection message to the UE. According to the connection mode used by the UE under the target network device of the UE indicated by the UE to the target network device of the UE in S401, if the connection mode is the direct connection, the response message corresponding to the RRC connection resume request message can be directly sent through the Uu interface. If the connection mode is the indirect connection, the response message corresponding to the RRC connection resume request message can be relayed by the relay device.

The method for RRC connection resuming of a terminal provided by this embodiment, if the information carried by the UE when requesting the resuming of the RRC connection from the target network device of the UE indicates that: the connection mode used when the UE enters the RRC_INACTIVE state under the anchor network device of the UE is the indirect connection, the target network device of the UE rejects the RRC connection resume request of UE according to the indirect connection. Optionally, the UE may initiate a new RRC connection to the target network device of the UE to enter an RRC_CONNECTED state.

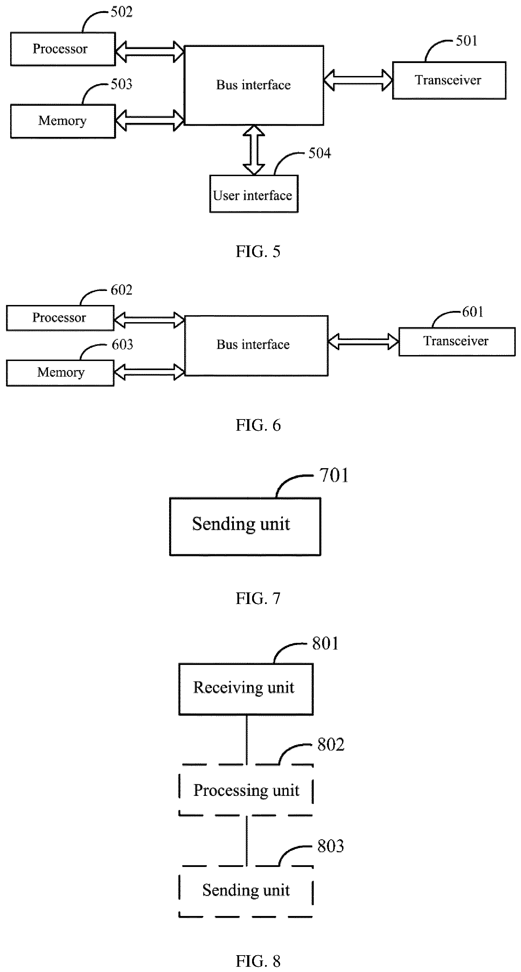

On the terminal side, the embodiment of the present application provides an apparatus for RRC connection resuming of a terminal. As shown in FIG. 5, the apparatus for RRC connection resuming of the terminal in this embodiment can be a terminal, and the apparatus for RRC connection resuming of the terminal can include a transceiver 501, a processor 502 and a memory 503.

The transceiver 501 is configured to receive and send data under control of the processor 502.

In FIG. 5, the bus architecture may include any number of interconnected buses and bridges, specifically linked together by various circuits of one or more processors represented by the processor 502 and one or more memories represented by the memory 503. The bus architecture may also link various other circuits together, such as peripherals, voltage regulators, and power management circuits, which are well known in the art and therefore will not be further described herein. The bus interface provides an interface. The transceiver 501 may be a plurality of elements, that is, including a transmitter and a receiver, and provides a unit for communicating with various other apparatuses over a transmission medium, the transmission medium includes a transmission medium such as a wireless channel, a wired channel, a fiber optic cable, etc. Optionally, the apparatus for RRC connection resuming of the terminal can also include a user interface 504. For different user equipment, the user interface 504 can also be an interface that can connect the required device externally and internally. The connected device includes but is not limited to a keypad, a display, a speaker, a microphone, a joystick, etc.

The processor 502 is responsible for managing the bus architecture and usual processing, and the memory 503 may store data used by the processor 502 when performing operations.

The processor 502 may be a central processing unit (central processing unit, CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD). The processor may also have a multi-core architecture.

The processor 502 is configured to execute any method performed by the terminal in the embodiment of the present application according to the obtained executable instruction by calling a computer program stored in the memory 503. The processor 502 and the memory 503 may also be physically separately arranged.

Optionally, the processor 502 is configured to perform the following operations:
sending an RRC connection resume request message to a target network device, where the RRC connection resume request message carries first indication information, and the first indication information is used to indicate a connection mode of the terminal under an anchor network device;
where the terminal is a terminal in an RRC inactive state, the target network device is a network device serving the terminal when the terminal initiates the RRC connection resuming, the anchor network device is a network device serving the terminal when the terminal enters the RRC inactive state, and the connection mode of the terminal under the anchor network device is a direct connection or an indirect connection, the direct connection refers to an RRC connection established between the terminal and the anchor network device through a Uu interface, and the indirect connection refers to an RRC connection established between the terminal and the anchor network device through a relay device.

Optionally, a prerequisite for carrying the first indication information in the RRC connection resume request message is that the terminal uses the indirect connection when entering the RRC inactive state under the anchor network device.

Optionally, the RRC connection resume request message carries the first indication information in an explicit mode, the explicit mode refers to adding a 1-bit indication information in the RRC connection resume request message, and the 1-bit indication information is used to indicate whether the connection mode of the terminal under the anchor network device is the direct connection or the indirect connection.

Optionally, the RRC connection resume request message further carries second indication information, and the second indication information is used to indicate a connection mode of the terminal under the target network device; where the connection mode of the terminal under the target network device is a direct connection or an indirect connection, the direct connection of the terminal under the target network device refers to an RRC connection established between the terminal and the target network device through the Uu interface, and the indirect connection of the terminal under the target network device refers to an RRC connection established between the terminal and the target network device through the relay device.

Optionally, the RRC connection resume request message carries the second indication information in an explicit or implicit mode.

Optionally, the explicit mode refers to adding a 1-bit indication information in the RRC connection resume request message and the 1-bit indication information is used to indicate whether the connection mode of the terminal under the target network device is the direct connection or the indirect connection.

Optionally, the implicit mode refers to indicating that the connection mode of the terminal under the target network device is the direct connection or the indirect connection by a path through which the RRC connection resume request message is transmitted under the target network device.

It should be noted here that the above apparatus provided in the present application can implement all the method steps of the terminal in the above method embodiment, and can achieve the same technical effect. The same part and beneficial effect in this embodiment and the method embodiment will not be described in detail here.

On the network side, the embodiment of the present application provides an apparatus for RRC connection resuming of a terminal. As shown in FIG. 6, the apparatus for RRC connection resuming of the terminal in this embodiment can be a target network device of a terminal, and the apparatus for RRC connection resuming of the terminal can include a transceiver 601, a processor 602 and a memory 603.

The transceiver 601 is configured to receive and send data under control of the processor 602.

In FIG. 6, the bus architecture may include any number of interconnected buses and bridges, specifically linked together by various circuits of one or more processors represented by the processor 602 and one or more memories represented by the memory 603. The bus architecture may also link various other circuits together, such as peripherals, voltage regulators, and power management circuits, which are well known in the art and therefore will not be further described herein. The bus interface provides an interface. The transceiver 601 may be a plurality of elements, that is, including a transmitter and a receiver, and provides a unit for communicating with various other apparatuses over a transmission medium, which includes a transmission medium such as a wireless channel, a wired channel, a fiber optic cable, etc. The processor 602 is responsible for managing the bus architecture and usual processing, and the memory 603 may store data used by the processor 602 when performing operations.

The processor 602 can be a CPU, an ASIC, a FPGA or a CPLD, and the processor can also adopt multi-core architecture.

The processor 602 is configured to execute any method performed by the target network device in the embodiment of the present application according to the obtained executable instruction by calling a computer program stored in the memory 603. The processor and the memory may also be physically separately arranged.

Optionally, the processor 602 is configured to perform the following operations:
receiving an RRC connection resume request message sent by a terminal, where the RRC connection resume request message carries first indication information, and the first indication information is used to indicate a connection mode of the terminal under an anchor network device;
where the terminal is a terminal in an RRC inactive state, the target network device is a network device serving the terminal when the terminal initiates the RRC connection resuming, the anchor network device is a network device serving the terminal when the terminal enters the RRC inactive state, and the connection mode of the terminal under the anchor network device is a direct connection or an indirect connection, the direct connection refers to an RRC connection established between the terminal and the anchor network device through a Uu interface, and the indirect connection refers to an RRC connection established between the terminal and the anchor network device through a relay device.

Optionally, a prerequisite for carrying the first indication information in the RRC connection resume request message is that the terminal uses the indirect connection when entering the RRC inactive state under the anchor network device.

Optionally, the RRC connection resume request message carries the first indication information in an explicit mode, the explicit mode refers to adding a 1-bit indication information in the RRC connection resume request message, and the 1-bit indication information is used to indicate whether the connection mode of the terminal under the anchor network device is the direct connection or the indirect connection.

Optionally, the RRC connection resume request message further carries second indication information, and the second indication information is used to indicate a connection mode of the terminal under the target network device; where the connection mode of the terminal under the target network device is a direct connection or an indirect connection, the direct connection of the terminal under the target network device refers to an RRC connection established between the terminal and the target network device through the Uu interface, and the indirect connection of the terminal under the target network device refers to an RRC connection established between the terminal and the target network device through the relay device.

Optionally, the RRC connection resume request message carries the second indication information in an explicit mode or an implicit mode.

Optionally, the explicit mode refers to adding a 1-bit indication information in the RRC connection resume request message and the 1-bit indication information is used to indicate whether the connection mode of the terminal under the target network device is the direct connection or the indirect connection.

Optionally, the implicit mode refers to indicating that the connection mode of the terminal under the target network device is the direct connection or the indirect connection by a path through which the RRC connection resume request message is transmitted under the target network device.

Optionally, the processor 602 is further configured to perform the following operations:
if the connection mode of the terminal under the target network device is indirect connection, determining configuration information of the terminal related to a target relay device, where the target relay device is a relay device used by the terminal under the target network device.

Optionally, the processor 602 is further configured to perform the following operations:
after receiving the RRC connection resume request message sent by the terminal, acquiring context information of the terminal from the anchor network device of the terminal through an interface between network devices;
deleting relay-related configuration information from the context information; and
sending an RRC connection resume message to the terminal.

Optionally, the processor 602 is further configured to perform the following operations:
after receiving the RRC connection resume request message sent by the terminal, directly rejecting the RRC connection resuming of the terminal if it is determined, according to the first indication information carried in the RRC connection resume request message, that the connection mode used by the terminal under the anchor network device is the indirect connection.

It should be noted here that the above apparatus provided in the present application can achieve all the method steps of the target network device in the above method embodiment, and can achieve the same technical effect. The same part and beneficial effect in this embodiment and the method embodiment will not be described in detail here.

On the terminal side, the embodiment of the present application further provides an apparatus for RRC connection resuming of a terminal. As shown in FIG. 7, the apparatus for RRC connection resuming of the terminal in this embodiment can be a terminal, and the apparatus for RRC connection resuming of a terminal includes: a sending unit 701,
the sending unit 701 is configured to send an RRC connection resume request message to a target network device, where the RRC connection resume request message carries first indication information, and the first indication information is used to indicate a connection mode of the terminal under an anchor network device;
where the terminal is a terminal in an RRC inactive state, the target network device is a network device serving the terminal when the terminal initiates the RRC connection resuming, the anchor network device is a network device serving the terminal when the terminal enters the RRC inactive state, and the connection mode of the terminal under the anchor network device is a direct connection or an indirect connection, the direct connection refers to an RRC connection established between the terminal and the anchor network device through a Uu interface, and the indirect connection refers to an RRC connection established between the terminal and the anchor network device through a relay device.

Optionally, a prerequisite for carrying the first indication information in the RRC connection resume request message is that the terminal uses the indirect connection when entering the RRC inactive state under the anchor network device.

Optionally, the RRC connection resume request message carries the first indication information in an explicit mode, the explicit mode refers to adding a 1-bit indication information in the RRC connection resume request message, and the 1-bit indication information is used to indicate whether the connection mode of the terminal under the anchor network device is the direct connection or the indirect connection.

Optionally, the RRC connection resume request message further carries second indication information, and the second indication information is used to indicate a connection mode of the terminal under the target network device; where the connection mode of the terminal under the target network device is a direct connection or an indirect connection, the direct connection of the terminal under the target network device refers to an RRC connection established between the terminal and the target network device through the Uu interface, and the indirect connection of the terminal under the target network device refers to an RRC connection established between the terminal and the target network device through the relay device.

Optionally, the RRC connection resume request message carries the second indication information in an explicit or implicit mode.

Optionally, the explicit mode refers to adding a 1-bit indication information in the RRC connection resume request message and the 1-bit indication information is used to indicate whether the connection mode of the terminal under the target network device is the direct connection or the indirect connection.

Optionally, the implicit mode refers to indicating that the connection mode of the terminal under the target network device is the direct connection or the indirect connection by a path through which the RRC connection resume request message is transmitted under the target network device.

It should be noted here that the above apparatus provided in the present application can implement all the method steps of the terminal in the above method embodiment, and can achieve the same technical effect. The same part and beneficial effect in this embodiment and the method embodiment will not be described in detail here.

On the network side, the embodiment of the present application further provides an apparatus for RRC connection resuming of a terminal. As shown in FIG. 8, the apparatus for RRC connection resuming of the terminal in this embodiment can be a target network device, and the apparatus for RRC connection resuming of the terminal includes: a receiving unit 801,
the receiving unit 801 is configured to receive an RRC connection resume request message sent by a terminal, where the RRC connection resume request message carries first indication information, and the first indication information is used to indicate a connection mode of the terminal under an anchor network device;
where the terminal is a terminal in an RRC inactive state, the target network device is a network device serving the terminal when the terminal initiates the RRC connection resuming, the anchor network device is a network device serving the terminal when the terminal enters the RRC inactive state, and the connection mode of the terminal under the anchor network device is a direct connection or an indirect connection, the direct connection refers to an RRC connection established between the terminal and the anchor network device through a Uu interface, and the indirect connection refers to an RRC connection established between the terminal and the anchor network device through a relay device.

Optionally, a prerequisite for carrying the first indication information in the RRC connection resume request message is that the terminal uses the indirect connection when entering the RRC inactive state under the anchor network device.

Optionally, the RRC connection resume request message carries the first indication information in an explicit mode, the explicit mode refers to adding a 1-bit indication information in the RRC connection resume request message, and the 1-bit indication information is used to indicate whether the connection mode of the terminal under the anchor network device is the direct connection or the indirect connection.

Optionally, the RRC connection resume request message further carries second indication information, and the second indication information is used to indicate a connection mode of the terminal under the target network device; where the connection mode of the terminal under the target network device is a direct connection or an indirect connection, the direct connection of the terminal under the target network device refers to an RRC connection established between the terminal and the target network device through the Uu interface, and the indirect connection of the terminal under the target network device refers to an RRC connection established between the terminal and the target network device through the relay device.

Optionally, the RRC connection resume request message carries the second indication information in an explicit mode or an implicit mode.

Optionally, the explicit mode refers to adding a 1-bit indication information in the RRC connection resume request message and the 1-bit indication information is used to indicate whether the connection mode of the terminal under the target network device is the direct connection or the indirect connection.

Optionally, the implicit mode refers to indicating that the connection mode of the terminal under the target network device is the direct connection or the indirect connection by a path through which the RRC connection resume request message is transmitted under the target network device.

Optionally, the apparatus of this embodiment further includes: a processing unit 802,
the processing unit 802 is configured to: if the connection mode of the terminal under the target network device is the indirect connection, determine configuration information of the terminal related to a target relay device, where the target relay device is a relay device used by the terminal under the target network device.

Optionally, the apparatus of this embodiment further includes: a processing unit 802 and a sending unit 803,
the receiving unit 801 is further configured to: acquire context information of the terminal from the anchor network device of the terminal through an interface between network devices after receiving the RRC connection resume request message sent by the terminal;
the processing unit 802 is configured to delete relay-related configuration information from the context information; and
the sending unit 803 is configured to send an RRC connection resume message to the terminal.

Optionally, the apparatus of this embodiment further includes: a processing unit 802,
the processing unit 802 is configured to: after the receiving unit 801 receives the RRC connection resume request message sent by the terminal, directly reject the RRC connection resuming of the terminal if it is determined, according to the first indication information carried in the RRC connection resume request message, that the connection mode used by the terminal under the anchor network device is the indirect connection.

It should be noted here that the above apparatus provided in the present application can implement all the method steps of the target network device in the above method embodiment, and can achieve the same technical effect. The same part and beneficial effect in this embodiment and the method embodiment will not be described in detail here.

It should be noted that the division of the units in the embodiments of the present application is schematic and is only a logical functional division. In an actual implementation, there may be other division manners. In addition, each functional unit in each embodiment of the present application may be integrated in a single processing unit, or each unit may be physically present separately, or two or more units may be integrated in a single unit. The above integrated units can be implemented either in the form of hardware or in the form of software functional units.

The integrated units may be stored in a processor-readable storage medium when implemented in the form of software function units and sold or used as an independent product. Based on this understanding, the technical solution of the present application is essentially, or the part which makes contribution to the prior art, or all or part of the technical solution can be embodied in the form of a software product. The computer software product may be stored in a storage medium, including several instructions for enabling a computer device (which may be a personal computer, a server, or a network device, etc.) or a processor (processor) to execute all or part of the steps of the methods in the various embodiments of the present application. The aforementioned storage media includes: a U disk, a mobile hard disk, a read-only memory (Read-Only Memory, ROM), a random access memory (Random Access Memory, RAM), a magnetic disk or an optical disk and other medium that can store program codes.

At terminal side, an embodiment of the present application provides a processor-readable storage medium, where the processor-readable storage medium has a computer program stored thereon. The computer program is used to enable the processor to execute any one of the methods related to the terminal according to the embodiment of the present application. To enable the processor to implement all the method steps implemented by the terminal in the above method embodiments and achieve the same technical effect, the same part and beneficial effect in this embodiment and the method embodiment will not be described in detail.

At network side, an embodiment of the present application provides a processor-readable storage medium, where the processor-readable storage medium has a computer program stored thereon. The computer program is used to enable the processor to execute any one of the methods related to the network device according to the embodiment of the present application. To enable the processor to implement all the method steps implemented by the network device in the above method embodiments and achieve the same technical effect, the same part and beneficial effect in this embodiment and the method embodiment will not be described in detail.

At terminal side, an embodiment of the present application provides a computer program product, including a computer program. When the computer program is executed by the processor, all the method steps implemented by the terminal in the above method embodiment can be implemented, and the same technical effect can be achieved, the same part and beneficial effect in this embodiment and the method embodiment will not be described in detail.

At network side, an embodiment of the present application provides a computer program product, including a computer program. When the computer program is executed by the processor, all the method steps implemented by the target network device in the above method embodiment can be implemented, and the same technical effect can be achieved, the same part and beneficial effect in this embodiment and the method embodiment will not be described in detail.

The processor-readable storage medium may be any available medium or data storage device that can be accessed by the processor, including but not limited to a magnetic storage (such as a floppy disk, a hard disk, a magnetic tape, a magneto-optical disk (MO), etc.), an optical storage (such as compact disc (CD), digital video disc (DVD), Blu-ray disc (BD), high-definition versatile disc (HVD), etc.), and a semiconductor storage (such as an ead-only memory (ROM), an erasable programmable read-only memory (EPROM), an electrically erasable programmable read-only memory (EEPROM), a non-volatile memory (NAND FLASH), a solid state disk (SSD)), etc.

Those skilled in the art should understand that embodiments of the present application may be provided as methods, systems, or computer program products. Accordingly, the present application may take the form of an entirely hardware embodiment, an entirely software embodiment or an embodiment combining software and hardware aspects. The present application may take the form of a computer program product embodied on one or more computer-usable storage mediums (including but not limited to a disk storage and an optical storage, etc.) having a computer-usable program code stored thereon.

The present application is described with reference to flowcharts and/or block diagrams of methods, apparatus, and computer program products according to embodiments of the present application. It should be understood that each procedure and/or block in the flowchart and/or block diagrams, and combinations of procedures and/or blocks in the flowchart and/or block diagrams can be implemented by the computer-executable instruction. These computer-executable instructions may be provided to a processor of a general-purpose computer, a specialized computer, an embedded processor, or other programmable data processor to produce a machine, such that an apparatus for implementing a function specified in one or more processes of the flowchart and/or one or more blocks of the block diagram may be produced via the instructions executed by the processor of the computer or other programmable data processor.

These processor-executable instructions may also be stored in a processor-readable memory capable of directing a computer or other programmable data processors to operate in a specific manner, such that the instructions stored in the processor-readable memory produce a manufacturing product including an instruction apparatus, where the instruction apparatus implements the function specified in one or more procedures of the flow chart and/or one or more blocks of the block diagram.

These processor-executable instructions may also be loaded onto a computer or other programmable data processing device, such that a series of operational steps may be performed on the computer or other programmable device to produce computer-implemented processing. Therefore, the instructions executed on the computer or other programmable device provide steps for implementing the functions specified in one or more processes of the flowchart and/or one or more blocks of the block diagram.

## Claims

1. A method for radio resource control, RRC, connection resuming of a terminal, comprising:
sending (S201), by a terminal, an RRC connection resume request message to a target network device,
**characterized in that**,
the RRC connection resume request message carries first indication information, and the first indication information is used to indicate a connection mode of the terminal under an anchor network device, wherein the connection mode of the terminal under the anchor network device is a direct connection or an indirect connection;
wherein the terminal is a terminal in an RRC inactive state, the target network device is a network device serving the terminal when the terminal initiates the RRC connection resuming, the anchor network device is a network device serving the terminal when the terminal enters the RRC inactive state, and the direct connection refers to an RRC connection established between the terminal and the anchor network device through a Uu interface, and the indirect connection refers to an RRC connection established between the terminal and the anchor network device through a relay device.

2. The method according to claim 1, wherein the RRC connection resume request message carries the first indication information in an explicit mode, the explicit mode refers to adding a 1-bit indication information in the RRC connection resume request message, and the 1-bit indication information is used to indicate whether the connection mode of the terminal under the anchor network device is the direct connection or the indirect connection.

3. The method according to claim 1 or 2, wherein,
the RRC connection resume request message further carries second indication information, and the second indication information is used to indicate a connection mode of the terminal under the target network device; wherein the connection mode of the terminal under the target network device is a direct connection or an indirect connection, the direct connection of the terminal under the target network device refers to an RRC connection established between the terminal and the target network device through the Uu interface, and the indirect connection of the terminal under the target network device refers to an RRC connection established between the terminal and the target network device through the relay device.

4. The method according to claim 3, wherein the RRC connection resume request message carries the second indication information in an explicit mode or an implicit mode;
wherein the explicit mode refers to adding a 1-bit indication information in the RRC connection resume request message, and the 1-bit indication information is used to indicate whether the connection mode of the terminal under the target network device is the direct connection or the indirect connection; or
the implicit mode refers to indicating that the connection mode of the terminal under the target network device is the direct connection or the indirect connection by a path through which the RRC connection resume request message is transmitted under the target network device.

5. A method for radio resource control, RRC, connection resuming of a terminal, comprising:
receiving, by a target network device, an RRC connection resume request message sent by a terminal,
**characterized in that**,
the RRC connection resume request message carries first indication information, and the first indication information is used to indicate a connection mode of the terminal under an anchor network device, wherein the connection mode of the terminal under the anchor network device is a direct connection or an indirect connection;
wherein the terminal is a terminal in an RRC inactive state, the target network device is a network device serving the terminal when the terminal initiates the RRC connection resuming, the anchor network device is a network device serving the terminal when the terminal enters the RRC inactive state, and the direct connection refers to an RRC connection established between the terminal and the anchor network device through a Uu interface, and the indirect connection refers to an RRC connection established between the terminal and the anchor network device through a relay device.

6. The method according to claim 5, wherein, the RRC connection resume request message carries the first indication information in an explicit mode, the explicit mode refers to adding a 1-bit indication information in the RRC connection resume request message, and the 1-bit indication information is used to indicate whether the connection mode of the terminal under the anchor network device is the direct connection or the indirect connection.

7. The method according to claim 5, wherein,
the RRC connection resume request message further carries second indication information, and the second indication information is used to indicate a connection mode of the terminal under the target network device; wherein the connection mode of the terminal under the target network device is a direct connection or an indirect connection, the direct connection of the terminal under the target network device refers to an RRC connection established between the terminal and the target network device through the Uu interface, and the indirect connection of the terminal under the target network device refers to an RRC connection established between the terminal and the target network device through the relay device.

8. The method according to claim 7, wherein the RRC connection resume request message carries the second indication information in an explicit mode or an implicit mode;
wherein the explicit mode refers to adding a 1-bit indication information in the RRC connection resume request message, and the 1-bit indication information is used to indicate whether the connection mode of the terminal under the target network device is the direct connection or the indirect connection; or
the implicit mode refers to indicating that the connection mode of the terminal under the target network device is the direct connection or the indirect connection by a path through which the RRC connection resume request message is transmitted under the target network device.

9. The method according to claim 7 or 8, further comprising:
if the connection mode of the terminal under the target network device is the indirect connection, determining, by the target network device, configuration information of the terminal related to a target relay device, wherein the target relay device is a relay device used by the terminal under the target network device.

10. The method according to any one of claims 5 to 8, further comprising:
after receiving the RRC connection resume request message sent by the terminal, acquiring, by the target network device, context information of the terminal from the anchor network device of the terminal through an interface between network devices;
deleting, by the target network device, relay-related configuration information from the context information; and
sending, by the target network device, an RRC connection resume message to the terminal.

11. The method according to any one of claims 5 to 8, further comprising:
after receiving the RRC connection resume request message sent by the terminal, directly rejecting, by the target network device, the RRC connection resuming of the terminal if it is determined, according to the first indication information carried in the RRC connection resume request message, that the connection mode used by the terminal under the anchor network device is the indirect connection.

12. An apparatus for radio resource control, RRC, connection resuming of a terminal, applied to a terminal, comprising:
a sending unit (701), configured to send an RRC connection resume request message to a target network device,
**characterized in that**,
the RRC connection resume request message carries first indication information, and the first indication information is used to indicate a connection mode of the terminal under an anchor network device, wherein the connection mode of the terminal under the anchor network device is a direct connection or an indirect connection;
wherein the terminal is a terminal in an RRC inactive state, the target network device is a network device serving the terminal when the terminal initiates the RRC connection resuming, the anchor network device is a network device serving the terminal when the terminal enters the RRC inactive state, and the direct connection refers to an RRC connection established between the terminal and the anchor network device through a Uu interface, and the indirect connection refers to an RRC connection established between the terminal and the anchor network device through a relay device.

13. An apparatus for radio resource control, RRC, connection resuming of a terminal, applied to a target network device for the terminal, comprising:
a receiving unit (801), configured to receive an RRC connection resume request message sent by a terminal,
**characterized in that**,
the RRC connection resume request message carries first indication information, and the first indication information is used to indicate a connection mode of the terminal under an anchor network device, wherein the connection mode of the terminal under the anchor network device is a direct connection or an indirect connection;
wherein the terminal is a terminal in an RRC inactive state, the target network device is a network device serving the terminal when the terminal initiates the RRC connection resuming, the anchor network device is a network device serving the terminal when the terminal enters the RRC inactive state, and the direct connection refers to an RRC connection established between the terminal and the anchor network device through a Uu interface, and the indirect connection refers to an RRC connection established between the terminal and the anchor network device through a relay device.

14. A processor-readable storage medium, wherein the processor-readable storage medium has a computer program stored thereon, and the computer program is used to enable the processor to execute the method according to any one of claims 1 to 4 or the method according to any one of claims 5 to 11.

## Patentansprüche

1. Verfahren zur Wiederaufnahme einer Funkressourcensteuerungs-(RRC)-Verbindung eines Endgeräts, umfassend:
Senden (S201), durch ein Endgerät, einer RRC-Verbindungswiederaufnahme-Anforderungsnachricht an eine Zielnetzwerkvorrichtung,
**dadurch gekennzeichnet, dass**
die RRC-Verbindungswiederaufnahme-Anforderungsnachricht erste Anzeigeinformationen trägt und die ersten Anzeigeinformationen verwendet werden, um einen Verbindungsmodus des Endgeräts unter einer Anker-Netzwerkvorrichtung anzuzeigen, wobei der Verbindungsmodus des Endgeräts unter der Anker-Netzwerkvorrichtung eine direkte Verbindung oder eine indirekte Verbindung ist;
wobei das Endgerät ein Endgerät in einem inaktiven RRC-Zustand ist, die Zielnetzwerkvorrichtung eine Netzwerkvorrichtung ist, die das Endgerät bedient, wenn das Endgerät die Wiederaufnahme der RRC-Verbindung einleitet, die Anker-Netzwerkvorrichtung eine Netzwerkvorrichtung ist, die das Endgerät bedient, wenn das Endgerät in den inaktiven RRC-Zustand eintritt, und sich die direkte Verbindung auf eine RRC-Verbindung bezieht, die zwischen dem Endgerät und der Anker-Netzwerkvorrichtung über eine Uu-Schnittstelle hergestellt wurde, und sich die indirekte Verbindung auf eine RRC-Verbindung bezieht, die zwischen dem Endgerät und der Anker-Netzwerkvorrichtung über eine Relaisvorrichtung hergestellt wurde.

2. Verfahren nach Anspruch 1, wobei die RRC-Verbindungswiederaufnahme-Anforderungsnachricht die ersten Anzeigeinformationen in einem expliziten Modus trägt, sich der explizite Modus auf das Hinzufügen von 1-Bit-Anzeigeinformationen in der RRC-Verbindungswiederaufnahme-Anforderungsnachricht bezieht und die 1-Bit-Anzeigeinformationen verwendet werden, um anzuzeigen, ob der Verbindungsmodus des Endgeräts unter der Anker-Netzwerkvorrichtung die direkte Verbindung oder die indirekte Verbindung ist.

3. Verfahren nach Anspruch 1 oder 2, wobei
die RRC-Verbindungswiederaufnahme-Anforderungsnachricht ferner zweite Anzeigeinformationen trägt und die zweiten Anzeigeinformationen verwendet werden, um einen Verbindungsmodus des Endgeräts unter der Zielnetzwerkvorrichtung anzuzeigen; wobei der Verbindungsmodus des Endgeräts unter der Zielnetzwerkvorrichtung eine direkte Verbindung oder eine indirekte Verbindung ist, sich die direkte Verbindung des Endgeräts unter der Zielnetzwerkvorrichtung auf eine RRC-Verbindung bezieht, die zwischen dem Endgerät und der Zielnetzwerkvorrichtung über die Uu-Schnittstelle hergestellt wurde, und sich die indirekte Verbindung des Endgeräts unter der Zielnetzwerkvorrichtung auf eine RRC-Verbindung bezieht, die zwischen dem Endgerät und der Zielnetzwerkvorrichtung über die Relaisvorrichtung hergestellt wurde.

4. Verfahren nach Anspruch 3, wobei die RRC-Verbindungswiederaufnahme-Anforderungsnachricht die zweiten Anzeigeinformationen in einem expliziten Modus oder einem impliziten Modus trägt;
wobei sich der explizite Modus auf das Hinzufügen von 1-Bit-Anzeigeinformationen zu der RRC-Verbindungswiederaufnahme-Anforderungsnachricht bezieht und die 1-Bit-Anzeigeinformationen verwendet werden, um anzuzeigen, ob der Verbindungsmodus des Endgeräts unter der Zielnetzwerkvorrichtung die direkte Verbindung oder die indirekte Verbindung ist; oder
sich der implizite Modus auf die Anzeige bezieht, dass der Verbindungsmodus des Endgeräts unter der Zielnetzwerkvorrichtung die direkte Verbindung oder die indirekte Verbindung über einen Pfad ist, über den die RRC-Verbindungswiederaufnahme-Anforderungsnachricht unter der Zielnetzwerkvorrichtung übertragen wird.

5. Verfahren zur Wiederaufnahme einer Funkressourcensteuerungs-(RRC)-Verbindung eines Endgeräts, umfassend:
Empfangen, durch eine Zielnetzwerkvorrichtung, einer RRC-Verbindungswiederaufnahme-Anforderungsnachricht, die durch ein Endgerät gesendet wird,
**dadurch gekennzeichnet, dass**
die RRC-Verbindungswiederaufnahme-Anforderungsnachricht erste Anzeigeinformationen trägt und die ersten Anzeigeinformationen verwendet werden, um einen Verbindungsmodus des Endgeräts unter einer Anker-Netzwerkvorrichtung anzuzeigen, wobei der Verbindungsmodus des Endgeräts unter der Anker-Netzwerkvorrichtung eine direkte Verbindung oder eine indirekte Verbindung ist;
wobei das Endgerät ein Endgerät in einem inaktiven RRC-Zustand ist, die Zielnetzwerkvorrichtung eine Netzwerkvorrichtung ist, die das Endgerät bedient, wenn das Endgerät die Wiederaufnahme der RRC-Verbindung einleitet, die Anker-Netzwerkvorrichtung eine Netzwerkvorrichtung ist, die das Endgerät bedient, wenn das Endgerät in den inaktiven RRC-Zustand eintritt, und sich die direkte Verbindung auf eine RRC-Verbindung bezieht, die zwischen dem Endgerät und der Anker-Netzwerkvorrichtung über eine Uu-Schnittstelle hergestellt wurde, und sich die indirekte Verbindung auf eine RRC-Verbindung bezieht, die zwischen dem Endgerät und der Anker-Netzwerkvorrichtung über eine Relaisvorrichtung hergestellt wurde.

6. Verfahren nach Anspruch 5, wobei die RRC-Verbindungswiederaufnahme-Anforderungsnachricht die ersten Anzeigeinformationen in einem expliziten Modus trägt, sich der explizite Modus auf das Hinzufügen von 1-Bit-Anzeigeinformationen in der RRC-Verbindungswiederaufnahme-Anforderungsnachricht bezieht und die 1-Bit-Anzeigeinformationen verwendet werden, um anzuzeigen, ob der Verbindungsmodus des Endgeräts unter der Anker-Netzwerkvorrichtung die direkte Verbindung oder die indirekte Verbindung ist.

7. Verfahren nach Anspruch 5, wobei
die RRC-Verbindungswiederaufnahme-Anforderungsnachricht ferner zweite Anzeigeinformationen trägt und die zweiten Anzeigeinformationen verwendet werden, um einen Verbindungsmodus des Endgeräts unter der Zielnetzwerkvorrichtung anzuzeigen; wobei der Verbindungsmodus des Endgeräts unter der Zielnetzwerkvorrichtung eine direkte Verbindung oder eine indirekte Verbindung ist, sich die direkte Verbindung des Endgeräts unter der Zielnetzwerkvorrichtung auf eine RRC-Verbindung bezieht, die zwischen dem Endgerät und der Zielnetzwerkvorrichtung über die Uu-Schnittstelle hergestellt wurde, und sich die indirekte Verbindung des Endgeräts unter der Zielnetzwerkvorrichtung auf eine RRC-Verbindung bezieht, die zwischen dem Endgerät und der Zielnetzwerkvorrichtung über die Relaisvorrichtung hergestellt wurde.

8. Verfahren nach Anspruch 7, wobei die RRC-Verbindungswiederaufnahme-Anforderungsnachricht die zweiten Anzeigeinformationen in einem expliziten Modus oder einem impliziten Modus trägt;
wobei sich der explizite Modus auf das Hinzufügen von 1-Bit-Anzeigeinformationen zu der RRC-Verbindungswiederaufnahme-Anforderungsnachricht bezieht und die 1-Bit-Anzeigeinformationen verwendet werden, um anzuzeigen, ob der Verbindungsmodus des Endgeräts unter der Zielnetzwerkvorrichtung die direkte Verbindung oder die indirekte Verbindung ist; oder
sich der implizite Modus auf die Anzeige bezieht, dass der Verbindungsmodus des Endgeräts unter der Zielnetzwerkvorrichtung die direkte Verbindung oder die indirekte Verbindung über einen Pfad ist, über den die RRC-Verbindungswiederaufnahme-Anforderungsnachricht unter der Zielnetzwerkvorrichtung übertragen wird.

9. Verfahren nach Anspruch 7 oder 8, ferner umfassend:
wenn der Verbindungsmodus des Endgeräts unter der Zielnetzwerkvorrichtung die indirekte Verbindung ist, Bestimmen, durch die Zielnetzwerkvorrichtung, von Konfigurationsinformationen des Endgeräts in Bezug auf eine Zielrelaisvorrichtung, wobei die Zielrelaisvorrichtung eine Relaisvorrichtung ist, die von dem Endgerät unter der Zielnetzwerkvorrichtung verwendet wird.

10. Verfahren nach einem der Ansprüche 5 bis 8, weiter umfassend:
nach dem Empfangen der RRC-Verbindungswiederaufnahme-Anforderungsnachricht, die von dem Endgerät gesendet wird, Erfassen, durch die Zielnetzwerkvorrichtung, von Kontextinformationen des Endgeräts von der Anker-Netzwerkvorrichtung des Endgeräts durch eine Schnittstelle zwischen Netzwerkvorrichtungen;
Löschen, durch die Zielnetzwerkvorrichtung, von relaisbezogenen Konfigurationsinformationen aus den Kontextinformationen; und
Senden, durch die Zielnetzwerkvorrichtung, einer RRC-Verbindungswiederaufnahmenachricht an das Endgerät.

11. Verfahren nach einem der Ansprüche 5 bis 8, weiter umfassend:
nach dem Empfangen der RRC-Verbindungswiederaufnahme-Anforderungsnachricht, die von dem Endgerät gesendet wurde, direktes Zurückweisen, durch die Zielnetzwerkvorrichtung, der Wiederaufnahme der RRC-Verbindung des Endgeräts, wenn gemäß den ersten Anzeigeinformationen, die in der RRC-Verbindungswiederaufnahme-Anforderungsnachricht getragen sind, bestimmt wird, dass der Verbindungsmodus, der von dem Endgerät unter der Anker-Netzwerkvorrichtung verwendet wird, die indirekte Verbindung ist.

12. Vorrichtung zur Wiederaufnahme einer Funkressourcensteuerungs-(RRC)-Verbindung eines Endgeräts, die auf ein Endgerät angewendet wird, umfassend:
eine Sendeeinheit (701), die dazu konfiguriert ist, eine RRC-Verbindungswiederaufnahme-Anforderungsnachricht an eine Zielnetzwerkvorrichtung zu senden,
**dadurch gekennzeichnet, dass**
die RRC-Verbindungswiederaufnahme-Anforderungsnachricht erste Anzeigeinformationen trägt und die ersten Anzeigeinformationen verwendet werden, um einen Verbindungsmodus des Endgeräts unter einer Anker-Netzwerkvorrichtung anzuzeigen, wobei der Verbindungsmodus des Endgeräts unter der Anker-Netzwerkvorrichtung eine direkte Verbindung oder eine indirekte Verbindung ist;
wobei das Endgerät ein Endgerät in einem inaktiven RRC-Zustand ist, die Zielnetzwerkvorrichtung eine Netzwerkvorrichtung ist, die das Endgerät bedient, wenn das Endgerät die Wiederaufnahme der RRC-Verbindung einleitet, die Anker-Netzwerkvorrichtung eine Netzwerkvorrichtung ist, die das Endgerät bedient, wenn das Endgerät in den inaktiven RRC-Zustand eintritt, und sich die direkte Verbindung auf eine RRC-Verbindung bezieht, die zwischen dem Endgerät und der Anker-Netzwerkvorrichtung über eine Uu-Schnittstelle hergestellt wurde, und sich die indirekte Verbindung auf eine RRC-Verbindung bezieht, die zwischen dem Endgerät und der Anker-Netzwerkvorrichtung über eine Relaisvorrichtung hergestellt wurde.

13. Vorrichtung zur Wiederaufnahme einer Funkressourcensteuerungs-(RRC)-Verbindung eines Endgeräts, die auf eine Zielnetzwerkvorrichtung für das Endgerät angewendet wird, umfassend:
eine Empfangseinheit (801), die dazu konfiguriert ist, eine durch ein Endgerät gesendete RRC-Verbindungswiederaufnahme-Anforderungsnachricht zu empfangen,
**dadurch gekennzeichnet, dass**
die RRC-Verbindungswiederaufnahme-Anforderungsnachricht erste Anzeigeinformationen trägt und die ersten Anzeigeinformationen verwendet werden, um einen Verbindungsmodus des Endgeräts unter einer Anker-Netzwerkvorrichtung anzuzeigen, wobei der Verbindungsmodus des Endgeräts unter der Anker-Netzwerkvorrichtung eine direkte Verbindung oder eine indirekte Verbindung ist;
wobei das Endgerät ein Endgerät in einem inaktiven RRC-Zustand ist, die Zielnetzwerkvorrichtung eine Netzwerkvorrichtung ist, die das Endgerät bedient, wenn das Endgerät die Wiederaufnahme der RRC-Verbindung einleitet, die Anker-Netzwerkvorrichtung eine Netzwerkvorrichtung ist, die das Endgerät bedient, wenn das Endgerät in den inaktiven RRC-Zustand eintritt, und sich die direkte Verbindung auf eine RRC-Verbindung bezieht, die zwischen dem Endgerät und der Anker-Netzwerkvorrichtung über eine Uu-Schnittstelle hergestellt wurde, und sich die indirekte Verbindung auf eine RRC-Verbindung bezieht, die zwischen dem Endgerät und der Anker-Netzwerkvorrichtung über eine Relaisvorrichtung hergestellt wurde.

14. Prozessorlesbares Speichermedium, wobei auf dem prozessorlesbaren Speichermedium ein Computerprogramm gespeichert ist und das Computerprogramm verwendet wird, um den Prozessor in die Lage zu versetzen, das Verfahren nach einem der Ansprüche 1 bis 4 oder das Verfahren nach einem der Ansprüche 5 bis 11 auszuführen.

## Revendications

1. Procédé de reprise de connexion de commande de ressources radio, RRC, d'un terminal, comprenant :
l'envoi (S201), par un terminal, d'un message de demande de reprise de connexion de RRC à un dispositif de réseau cible,
**caractérisé en ce que**,
le message de demande de reprise de connexion de RRC transporte des premières informations d'indication, et les premières informations d'indication sont utilisées pour indiquer un mode de connexion du terminal sous le contrôle d'un dispositif de réseau d'ancrage, le mode de connexion du terminal sous le contrôle du dispositif de réseau d'ancrage étant une connexion directe ou une connexion indirecte ;
le terminal étant un terminal se trouvant dans un état de RRC inactif, le dispositif de réseau cible étant un dispositif de réseau desservant le terminal lorsque le terminal initie la reprise de connexion de RRC, le dispositif de réseau d'ancrage étant un dispositif de réseau desservant le terminal lorsque le terminal entre dans l'état de RRC inactif, et la connexion directe se référant à une connexion de RRC établie entre le terminal et le dispositif de réseau d'ancrage par l'intermédiaire d'une interface Uu, et la connexion indirecte se référant à une connexion de RRC établie entre le terminal et le dispositif de réseau d'ancrage par l'intermédiaire d'un dispositif relais.

2. Procédé selon la revendication 1, le message de demande de reprise de connexion de RRC transportant les premières informations d'indication dans un mode explicite, le mode explicite se référant à l'ajout d'informations d'indication d'1 bit dans le message de demande de reprise de connexion de RRC, et les informations d'indication d'1 bit étant utilisées pour indiquer si le mode de connexion du terminal sous le contrôle du dispositif de réseau d'ancrage est la connexion directe ou la connexion indirecte.

3. Procédé selon la revendication 1 ou 2, dans lequel,
le message de demande de reprise de connexion de RRC transporte en outre des secondes informations d'indication, et les secondes informations d'indication sont utilisées pour indiquer un mode de connexion du terminal sous le contrôle du dispositif de réseau cible ; le mode de connexion du terminal sous le contrôle du dispositif de réseau cible étant soit une connexion directe, soit une connexion indirecte, la connexion directe du terminal sous le contrôle du dispositif de réseau cible se référant à une connexion de RRC établie entre le terminal et le dispositif de réseau cible par l'intermédiaire de l'interface Uu, et la connexion indirecte du terminal sous le contrôle du dispositif de réseau cible se référant à une connexion de RRC établie entre le terminal et le dispositif de réseau cible par l'intermédiaire du dispositif relais.

4. Procédé selon la revendication 3, le message de demande de reprise de connexion de RRC transportant les secondes informations d'indication dans un mode explicite ou un mode implicite ;
le mode explicite se référant à l'ajout d'informations d'indication d'1 bit dans le message de demande de reprise de connexion de RRC, et les informations d'indication d'1 bit étant utilisées pour indiquer si le mode de connexion du terminal sous le contrôle du dispositif de réseau cible est la connexion directe ou la connexion indirecte ; ou
le mode implicite se référant au fait d'indiquer que le mode de connexion du terminal sous le contrôle du dispositif de réseau cible est une connexion directe ou une connexion indirecte par le biais d'un chemin par lequel le message de demande de reprise de connexion de RRC est transmis sous le contrôle du dispositif de réseau cible.

5. Procédé de reprise de connexion de commande de ressources radio, RRC, d'un terminal, comprenant :
la réception, par un dispositif de réseau cible, d'un message de demande de reprise de connexion de RRC envoyé par un terminal,
**caractérisé en ce que**,
le message de demande de reprise de connexion de RRC transporte des premières informations d'indication, et les premières informations d'indication sont utilisées pour indiquer un mode de connexion du terminal sous le contrôle d'un dispositif de réseau d'ancrage, le mode de connexion du terminal sous le contrôle du dispositif de réseau d'ancrage étant une connexion directe ou une connexion indirecte ;
le terminal étant un terminal se trouvant dans un état de RRC inactif, le dispositif de réseau cible étant un dispositif de réseau desservant le terminal lorsque le terminal initie la reprise de connexion de RRC, le dispositif de réseau d'ancrage étant un dispositif de réseau desservant le terminal lorsque le terminal entre dans l'état de RRC inactif, et la connexion directe se référant à une connexion de RRC établie entre le terminal et le dispositif de réseau d'ancrage par l'intermédiaire d'une interface Uu, et la connexion indirecte se référant à une connexion de RRC établie entre le terminal et le dispositif de réseau d'ancrage par l'intermédiaire d'un dispositif relais.

6. Procédé selon la revendication 5, le message de demande de reprise de connexion de RRC transportant les premières informations d'indication dans un mode explicite, le mode explicite se référant à l'ajout d'informations d'indication d'1 bit dans le message de demande de reprise de connexion de RRC, et les informations d'indication d'1 bit étant utilisées pour indiquer si le mode de connexion du terminal sous le contrôle du dispositif de réseau d'ancrage est la connexion directe ou la connexion indirecte.

7. Procédé selon la revendication 5, dans lequel,
le message de demande de reprise de connexion de RRC transporte en outre des secondes informations d'indication, et les secondes informations d'indication sont utilisées pour indiquer un mode de connexion du terminal sous le contrôle du dispositif de réseau cible ; le mode de connexion du terminal sous le contrôle du dispositif de réseau cible étant soit une connexion directe, soit une connexion indirecte, la connexion directe du terminal sous le contrôle du dispositif de réseau cible se référant à une connexion de RRC établie entre le terminal et le dispositif de réseau cible par l'intermédiaire de l'interface Uu, et la connexion indirecte du terminal sous le contrôle du dispositif de réseau cible se référant à une connexion de RRC établie entre le terminal et le dispositif de réseau cible par l'intermédiaire du dispositif relais.

8. Procédé selon la revendication 7, le message de demande de reprise de connexion de RRC transportant les secondes informations d'indication dans un mode explicite ou un mode implicite ;
le mode explicite se référant à l'ajout d'informations d'indication d'1 bit dans le message de demande de reprise de connexion de RRC, et les informations d'indication d'1 bit étant utilisées pour indiquer si le mode de connexion du terminal sous le contrôle du dispositif de réseau cible est la connexion directe ou la connexion indirecte ; ou
le mode implicite se référant au fait d'indiquer que le mode de connexion du terminal sous le contrôle du dispositif de réseau cible est une connexion directe ou une connexion indirecte par le biais d'un chemin par lequel le message de demande de reprise de connexion de RRC est transmis sous le contrôle du dispositif de réseau cible.

9. Procédé selon la revendication 7 ou 8, comprenant en outre :
si le mode de connexion du terminal sous le contrôle du dispositif de réseau cible est la connexion indirecte, la détermination, par le dispositif de réseau cible, des informations de configuration du terminal relatives à un dispositif relais cible, le dispositif relais cible étant un dispositif relais utilisé par le terminal sous le contrôle du dispositif de réseau cible.

10. Procédé selon l'une quelconque des revendications 5 à 8, comprenant en outre :
après réception du message de demande de reprise de connexion de RRC envoyé par le terminal, l'acquisition, par le dispositif de réseau cible, des informations de contexte du terminal à partir du dispositif de réseau d'ancrage du terminal par l'intermédiaire d'une interface entre dispositifs de réseau ;
la suppression, par le dispositif de réseau cible, des informations de configuration relatives au relais à partir des informations de contexte ; et
l'envoi, par le dispositif de réseau cible, d'un message de reprise de connexion de RRC au terminal.

11. Procédé selon l'une quelconque des revendications 5 à 8, comprenant en outre :
après réception du message de demande de reprise de connexion de RRC envoyé par le terminal, le rejet direct, par le dispositif de réseau cible, de la reprise de connexion de RRC du terminal s'il est déterminé, selon les premières informations d'indication transportées dans le message de demande de reprise de connexion de RRC, que le mode de connexion utilisé par le terminal sous le contrôle du dispositif de réseau d'ancrage est la connexion indirecte.

12. Appareil de reprise de connexion de commande de ressources radio, RRC, d'un terminal, appliqué à un terminal, comprenant :
une unité d'envoi (701), configurée pour envoyer un message de demande de reprise de connexion de RRC à un dispositif de réseau cible,
**caractérisé en ce que**,
le message de demande de reprise de connexion de RRC transporte des premières informations d'indication, et les premières informations d'indication sont utilisées pour indiquer un mode de connexion du terminal sous le contrôle d'un dispositif de réseau d'ancrage, le mode de connexion du terminal sous le contrôle du dispositif de réseau d'ancrage étant une connexion directe ou une connexion indirecte ;
le terminal étant un terminal se trouvant dans un état de RRC inactif, le dispositif de réseau cible étant un dispositif de réseau desservant le terminal lorsque le terminal initie la reprise de connexion de RRC, le dispositif de réseau d'ancrage étant un dispositif de réseau desservant le terminal lorsque le terminal entre dans l'état de RRC inactif, et la connexion directe se référant à une connexion de RRC établie entre le terminal et le dispositif de réseau d'ancrage par l'intermédiaire d'une interface Uu, et la connexion indirecte se référant à une connexion de RRC établie entre le terminal et le dispositif de réseau d'ancrage par l'intermédiaire d'un dispositif relais.

13. Appareil de reprise de connexion de commande de ressources radio, RRC, d'un terminal, appliqué à un dispositif de réseau cible pour le terminal, comprenant :
une unité de réception (801), configurée pour recevoir un message de demande de reprise de connexion de RRC envoyé par un terminal,
**caractérisé en ce que**,
le message de demande de reprise de connexion de RRC transporte des premières informations d'indication, et les premières informations d'indication sont utilisées pour indiquer un mode de connexion du terminal sous le contrôle d'un dispositif de réseau d'ancrage, le mode de connexion du terminal sous le contrôle du dispositif de réseau d'ancrage étant une connexion directe ou une connexion indirecte ;
le terminal étant un terminal se trouvant dans un état de RRC inactif, le dispositif de réseau cible étant un dispositif de réseau desservant le terminal lorsque le terminal initie la reprise de connexion de RRC, le dispositif de réseau d'ancrage étant un dispositif de réseau desservant le terminal lorsque le terminal entre dans l'état de RRC inactif, et la connexion directe se référant à une connexion de RRC établie entre le terminal et le dispositif de réseau d'ancrage par l'intermédiaire d'une interface Uu, et la connexion indirecte se référant à une connexion de RRC établie entre le terminal et le dispositif de réseau d'ancrage par l'intermédiaire d'un dispositif relais.

14. Support de stockage lisible par un processeur, le support de stockage lisible par un processeur comportant un programme informatique qui y est stocké, et le programme informatique étant utilisé pour permettre au processeur d'exécuter le procédé selon l'une quelconque des revendications 1 à 4 ou le procédé selon l'une quelconque des revendications 5 à 11.
